(19) Europäisches Patentamt / European Patent Office / Office européen des brevets

(11) **EP 3 259 700 B1**

(12) # EUROPÄISCHE PATENTSCHRIFT

(45) Veröffentlichungstag und Bekanntmachung des Hinweises auf die Patenterteilung:
**12.10.2022 Patentblatt 2022/41**

(21) Anmeldenummer: **16704838.8**

(22) Anmeldetag: **16.02.2016**

(51) Internationale Patentklassifikation (IPC):
***G06K 7/00*** *(2006.01)* ***G06K 19/07*** *(2006.01)*
***G06K 7/10*** *(2006.01)*

(52) Gemeinsame Patentklassifikation (CPC):
**G06K 7/0008; G06K 7/10207; G06K 7/10217; G06K 19/0723**

(86) Internationale Anmeldenummer:
**PCT/EP2016/053294**

(87) Internationale Veröffentlichungsnummer:
**WO 2016/131841 (25.08.2016 Gazette 2016/34)**

(54) **LESEGERÄT FÜR KONTAKTLOSE KARTEN**

WIRELESS CARD READER

LECTEUR DE CARTE SANS CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.02.2015 DE 102015203143**

(43) Veröffentlichungstag der Anmeldung:
**27.12.2017 Patentblatt 2017/52**

(73) Patentinhaber: **Bundesdruckerei GmbH**
**10969 Berlin (DE)**

(72) Erfinder: **PETERS, Florian**
**12103 Berlin (DE)**

(74) Vertreter: **Patentanwälte Bressel und Partner mbB**
**Potsdamer Platz 10**
**10785 Berlin (DE)**

(56) Entgegenhaltungen:
**DE-A1-102009 009 846**
**US-A1- 2005 225 437**
**US-A1- 2010 144 269**
**US-A1- 2011 241 837**
**US-B1- 6 476 708**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

**Beschreibung**

Die Erfindung betrifft ein Verfahren zum Betreiben eines Kartenlesegeräts von kontaktlos auslesbaren Karteneinheiten, ein solches Kartenlesegerät sowie kontaktlos auslesbare Karteneinheiten.

Aus dem Stand der Technik sind Kartenlesegeräte und kontaktlos auslesbare Karten bekannt, die einen integrierten Schaltkreis umfassen, in dem Informationen gespeichert sind bzw. gespeichert werden können. Bei einer Art von solchen Kartenlesegeräten und kontaktlos auslesbaren Karten erzeugt das Kartenlesegerät in einem Nahbereich ein hochfrequentes Magnetfeld. Der integrierte Schaltkreis der kontaktlos auslesbaren Karte ist mit einem Empfangsschaltkreis oder einer Empfangsantenne, die in der Regel als Induktion ausgebildet ist, verbunden. Wird die kontaktlos auslesbare Karte in den Nahbereich des Kartenlesegeräts verbracht, so wird durch das hochfrequente Magnetfeld in dem Empfangsschaltkreis der kontaktlos auslesbaren Karte ein Strom induziert, der genutzt wird, um den integrierten Schaltkreis mit elektrischer Energie zu versorgen. Über eine Modulation des erzeugten hochfrequenten Magnetfelds kann das Kartenlesegerät Informationen zu der kontaktlos auslesbaren Karte, d.h. zu dem integrierten Schaltkreis dieser kontaktlos auslesbaren Karte, übermitteln oder übertragen. Der integrierte Schaltkreis der kontaktlos auslesbaren Karte ist in der Lage, eine Last oder Kapazität des Empfangsschaltkreises periodisch gezielt zuzuschalten, wodurch das hochfrequente Magnetfeld verändert wird. Das Kartenlesegerät ist ausgebildet, solche Veränderungen des Magnetfeldes zu erfassen und auszuwerten. Auf diese Weise ist ein Informationsaustausch von der kontaktlos auslesbaren Karte zu dem Kartenlesegerät möglich. Auch diese Veränderung des Magnetfelds wird als Modulation bezeichnet.

Eine mögliche Ausgestaltung solcher Kartenlesegeräte und kontaktlos auslesbaren Karten ist in der Norm ISO/IEC 14443 "Identification cards - contactless integrated circuit (s) cards - proximity cards" beschrieben und normiert. Im Standard werden solche kontaktlos auslesbaren Karten auch als proximity integrated circuit cards oder kurz proximity cards (PICC) bezeichnet. Basierend auf diesem Standard arbeiten auch die durch die International Civil Aviation Organization - ICAO normierten Identifikationskarten, welche beispielsweise elektronische Reisepässe, elektronische Identifikationskarten usw. umfassen. Ebenso gibt es Kreditkarten, die diesen Standard oder sehr eng verwandte für eine Kommunikation nutzen. Karten für eine Vielzahl weiterer Anwendungen sind möglich.

In der erwähnten Norm ISO/IEC 14443 werden in dem Teil 2 "radio frequency power and signal interface" unterschiedliche Übertragungsarten beschrieben. Bei einer als Typ B bezeichneten Übertragungsart erfolgt eine Informationsübermittlung von dem Kartenlesegerät zu der kontaktlos auslesbaren Karte, die sich im Nahbereich des Kartenlesegeräts befindet, indem eine Magnetfeldstärke des erzeugten Hochfrequenzmagnetfelds zwischen einer unmodulierten Magnetfeldstärke, welche mit dem Buchstaben a assoziiert wird, und einer modulierten Magnetfeldstärke, die mit einem Buchstaben b assoziiert wird, umgetastet wird. Die unmodulierte Magnetfeldstärke und die modulierte Magnetfeldstärke sind von Null verschieden. Kombinationen aus unmodulierter und modulierter Magnetfeldstärke repräsentieren die unterschiedlichen Symbole der Kommunikation, aus denen die logischen Zustände 1 und 0 abgeleitet werden. Eine Umtastung erfolgt auf einem Zeitraster, d.h. mit einer Informationsübermittlungsfrequenz, die beispielsweise gemäß der Norm einem 128stel der Trägerfrequenz des Hochfrequenzmagnetfelds entspricht. Die Trägerfrequenz ist gemäß der Norm auf 13,56 MHz +/- 7 kHz festgelegt.

Um eine zuverlässige Signalübermittlung zwischen dem Kartenlesegerät und der kontaktlos auslesbaren Karten zu gewährleisten, ist es erforderlich, dass die unmodulierte Magnetfeldstärke und die modulierte Magnetfeldstärke in einem vorgegebenen Verhältnis zueinander stehen. Hierfür ist in der Norm ein so genannter Modulationsindex m definiert. Dieser ergibt sich als Quotient aus der Differenz der unmodulierten Magnetfeldstärke und der modulierten Magnetfeldstärke und der Summe dieser beiden Magnetfeldstärken. Formelmäßig ausgedrückt bedeutet dies:

$$m = \frac{\mathrm{a} - \mathrm{b}}{\mathrm{a} + \mathrm{b}}.$$

Um eine zuverlässige Erkennung des Modulationssignals, d.h. der übermittelten Information, durch die kontaktlos auslesbare Karte zu gewährleisten, ist eine Vorgabe des Modulationsindexes notwendig. Gemäß dem Standard ISO/IEC 14443 soll der Modulationsindex beispielsweise zwischen 8 % und 14 % liegen. Für die von der ICAO normierten Identifikationskarten gilt sogar eine Einschränkung auf einen Wertebereich von 10 % bis 14 %. Wird der Vorgabewert für den Modulationsindex durch das Kartenlesegerät nicht eingehalten, so führt dies häufig dazu, dass eine Kommunikation mit einer kontaktlos auslesbaren Karte im Nahbereich des Kartenlesegeräts nicht erfolgreich ausgeführt werden kann. Ferner hat es sich in der Praxis gezeigt, dass ein sich tatsächlich einstellender Modulationsindex in dem Hochfrequenzmagnetfeld von äußeren Einflüssen, beispielsweise einer Temperatur, Materialien in einer Umgebung des Nahbereiches, der kontaktlos auslesbaren Karte, intrinsischen Parametern der kontaktlos auslesbaren Karte, beispielsweise von deren Empfangsschaltkreis und/oder deren integriertem Schaltkreis, d.h. Mikrochip, usw. abhängig ist. Für eine Datenübertragung oder Datenübermittlung ist somit eine möglichst hohe Magnetfeldstärke mit einem korrekt angepassten Modulationsindex notwendig.

Gleiches oder Ähnliches gilt auch für andere Modulationsverfahren und Übermittlungs- oder Protokollstandards.

Die DE 10 2009 009 846 A1 beschreibt ein Kartenlesegerät und ein Verfahren, mit denen ein in dem Kartenlesegerät gemessener Modulationsindex angesteuert und an einen Vorgabewert angenähert wird.

Die US 2010/0144269 A1 zeigt ein Verfahren und eine Vorrichtung zum Steuern von drahtlosen Datenübertragungsschnittstellen zweier Komponenten, wobei eine Überwachungsvorrichtung der einen Komponente eine Änderung des Umfelds überwacht und beim Eintritt einer solchen Änderung die Schnittstelle der einen Komponente in Betreib nimmt, um mit der Schnittstelle einer anderen Komponente drahtlos Daten auszutauschen. Während der Überwachung des Umfelds ist die Schnittstelle für die Datenübertragung abgeschaltet.

Vermehrt werden kontaktlos auslesbare Karten sowie darin gespeicherte Daten zu kryptographischen Zwecken oder zur Identifizierung eines jeweiligen Trägers der kontaktlos auslesbaren Karte verwendet. Eine Dauer, in der eine Kommunikationsverbindung zwischen dem Kartenlesegerät und der kontaktlos auslesbaren Karte bestehen bleibt, nimmt somit stark zu und ist in der Regel von Prozessen abhängig, die weder im Kartenlesegerät noch in der kontaktlos auslesbaren Karte ausgeführt werden, sondern beispielsweis in einem mit dem Kartenlesegerät kommunikationstechnisch verbundenen Bank-Rechner bei einer Banktransaktion oder in einem mit dem Kartenlesegerät kommunikationstechnisch verbundenen Rechner einer Polizeibehörde beim Abfragen einer Datenbank unerwünschter Personen im Zuge eines Grenzübertritts.

Insbesondere, wenn das Kartenlesegerät mobil ausgebildet ist oder nur mittels eines begrenzten Energiespeichers, beispielsweise eines Akkumulators oder einer Batterie betrieben wird, ist eine Einsatzzeit des Kartenlesegerätes stark eingeschränkt.

Der Erfindung liegt somit das technische Problem zugrunde, ein Kartenlesegerät und ein Verfahren zum Betreiben eines Kartenlesegerätes sowie eine kontaktlos auslesbare Karteneinheit zu schaffen, mit denen eine längere Einsatzzeit des Kartenlesegeräts und dennoch zuverlässige und sichere Kommunikation ohne Einschränkung der Funktionalität des Systems aus einem Kartenlesegerät und einer kontaktlos auslesbaren Karteneinheit ermöglicht wird.

Das technische Problem wird erfindungsgemäß durch die in den unabhängigen Ansprüchen definierten Produkte und Verfahren gelöst. Vorteilhafte Ausführungsformen der Erfindung ergeben sich aus den Unteransprüchen.

Grundidee der Erfindung

Der Erfindung liegt der Gedanke zugrunde, die Magnetfeldstärke des Hochfrequenzfeldes in jenen Phasen abzusenken, in denen die Kommunikationsverbindung "nur gehalten" wird, da andere übergeordnete Prozesse oder Anwendungen, die Daten die von der kontaktlos auslesbaren Karteneinheit zu dem Kartenlesegerät übermittelt sind, verarbeiten. Ohne eine Kenntnis des oder der übergeordneten Prozesse kann dieses in jenen Situationen angenommen werden, in denen die kontaktlos auslesbare Karteneinheit eine Antwortinformation auf eine Anfrage des Kartenlesegerätes gesendet hat. In der Regel wird eine Kommunikation bei einer Nahfeldkommunikation immer nach einem Master-Slave-Verfahren (Herr-Sklave -Verfahren) ausgeführt, wobei das Kartenlesegerät der Master (Herr) ist. Der Slave (Sklave) ist die kontaktlos auslesbare Karteneinheit. Die Kommunikation wird immer von dem Master initiiert. Nach dem Empfang einer Antwort auf eine Anfrage in Form eines sogenannten Datenrahmens, liegt es somit in der Hand des Masters zu entscheiden wann eine neue Kommunikation erfolgt. Insbesondere wenn eine Anwendung, die mit dem Kartenlesegerät verbunden ist und Daten der Kontaktlosenkarteneinheit verarbeitet, entstehen somit häufig "Lücken" in der Kommunikation. In diesen Situationen ist ein Energiebedarf der kontaktlos auslesbaren Karte minimal, wenn man jene Einheiten, die für eine Analyse der übermittelten Daten, d.h. die Demodulation und weitere Verarbeitung, eine kryptographische Verarbeitung oder eine Modulation zum Zurücksenden von Antwortinformationen benötigt werden, deaktiviert oder nicht benutzt. Einige Informationen, die die Kommunikation betreffen, insbesondere ausgehandelte Übertragungsparameter, aber auch andere Daten, wie ausgetauschte kryptographische Schlüssel etc., müssen jedoch unverändert gespeichert bleiben, damit die logische und/oder physische Kommunikationsverbindung nicht unterbrochen wird und eine Funktionalität des Gesamtsystems aus dem Kartenlesegerät und der Anwendung (Applikation), welche beispielsweise auf einem PC mit einem fensterbasierten Betriebssystem ausgeführt wird, und einer kontaktlos auslesbare Karteneinheit nicht beeinträchtigt wird. Um dieses zu erreichen, wird vorgeschlagen, dass in einem Zeitbereich zwischen einem Empfang eines von der kontaktlos auslesbaren Karteneinheit (PICC) zu dem Kartenlesegerät (PCD) gesendeten Datenrahmens, der zumindest aufgrund der empfangenen Modulation, welche über die Variation des Hochfrequenzmagnetfelds durch die kontaktlos auslesbare Karteneinheit (PICC) bewirkt ist, eine korrekte Struktur aufweist, und einer nachfolgenden Informationsübermittlung von dem Kartenlesegerät (PCD) an die kontaktlos auslesbare Karteneinheit (PICC) die Magnetfeldstärke gegenüber einer Ausgangsmagnetfeldstärke abgesenkt wird, wobei die Ausgangsfeldstärke jene Magnetfeldstärke ist, mit welcher das seitens des Kartenlesegeräts nicht modulierte Hochfrequenzmagnetfeld während einer Informationsvermittlung zwischen dem Kartenlesegerät und der kontaktlos auslesbaren Karteneinheit erzeugt wird. Hierdurch kann eine sehr erhebliche Energieeinsparung bei langen externen Verarbeitungsprozessen der ausgetauschten Daten erreicht werden.

Definitionen

Eine Kommunikationszuverlässigkeit gibt ein Maß dafür an, dass eine Kommunikation zwischen dem Kartenlesegerät und einer kontaktlos auslesbaren Karte zustande kommt und solange wie benötigt aufrechterhalten bleibt, wenn sich diese im Nahbereich des Kartenlesegeräts befindet. Die Kommunikationssicherheit ist ein Maß dafür, dass die bei einer Kommunikation ausgetauschten Informationen korrekt übermittelt werden.

Als kontaktlos auslesbare Karte wird eine kartenförmige Einheit mit einer elektronischen Schaltung angesehen, welche in einem von einem Kartenlesegerät erzeugten Hochfrequenzmagnetfeld so betreibbar ist, dass in einem Nahbereich zu einem Kartenlesegerät über eine Modulation des Hochfrequenzmagnetfelds eine Informationsübermittlung zwischen dem Kartenlesegerät und der elektronischen Schaltung der kontaktlos auslesbare Karte möglich ist. In der Regel ist elektronische Schaltung ausgebildet, eine Last oder eine Kapazität eines Schwingkreises gezielt zu schalten, um hierüber das Hochfrequenzmagnetfeld zu variieren und hierdurch zu dem Kartenlesegerät eine Information zu übermitteln.

Als kontaktlos auslesbare Karteneinheit wird eine Entität bezeichnet, die eine Funktionalität einer kotaktlos auslesbaren Karte aufweist, unabhängig davon, ob die Entität kartenförmig ausgebildet ist oder nicht.

Als kartenförmig wird eine Entität bezeichnet, die als flacher Körper ausgebildet ist, dessen Abmessungen in einer flächige Ausdehnung größer als eine Stärke senkrecht zur flächigen Ausdehnung ist. Insbesondere Bankkarten, Kreditkarten, Passkarten, Führerscheinkarten, Personalausweiskarten etc. stellen kartenförmige Entitäten dar. Alle Körper die den Anforderungen der Formate ID-1 bis ID-3 oder ID-000 entsprechen, die in der Norm des ICAO-Dokuments 9303 Teil 1 angegeben sind, werden als kartenförmig angesehen.

Als Niedrigenergiemodus einer kontaktlos auslesbaren Karteneinheit wird ein Modus bezeichnet, bei dem die kontaktlos auslesbare Karteneinheit in einem Hochfrequenzmagnetfeld mit einer Feldstärke unterhalb einer für einen Normalmodus vorgesehenen Magnetfeldstärke betrieben wird.

Als korrekt funktionsfähig im Niedrigenergiemodus wird eine kontaktlos auslesbare Karteneinheit bezeichnet, die zumindest die Übertragungsparameter, die für eine aktuelle Kommunikationsverbindung ausgehandelt sind, und/oder andere für die Kommunikationsverbindung spezifische Daten in dem Niedrigenergiemodus so speichert, dass diese anschließend in einem Normalmodus wieder zur Verfügung stehen, ohne eine erneute Aushandlung der Parameter oder Daten zu erfordern.

Als Nahfeldkommunikation wird eine Kommunikation verstanden, die das elektromagnetische Nahfeld einer Sendeantenne zur Informationsübermittlung nutzt. Unabhängig von einer Antennenform wird hier darunter der eine Kommunikation in einem Abstandsbereich zur Sendeantenne verstanden, der Abstände s von der Sendeantenne umfasst, die kleiner, in der Regel um mehr als eine Größenordnung kleiner, als die Wellenlänge des elektromagnetischen Feld $\lambda$ geteilt durch $2\pi$ sind ($s< \lambda/(2\pi)$).

Als Datenrahmen wird eine Informationseinheit, welche zusammenhängend über eine Modulation des Hochfrequenzmagnetfelds bei einer Nahbereichskommunikation zwischen dem Kartenlesegerät und der kontaktlos auslesbaren Karteneinheit ausgetauscht wird. Die Struktur eines solchen Datenrahmens ist in einem Protokoll, welches für die Informationsübermittlung verwendet wird, festgelegt. Abhängig vom Inhalt der übertragenen Information kann die Struktur sich ändern. In der Regel umfasst ein Datenrahmen neben der "reinen Information" auch andere Bestandteile wie eine Startsequenz, eine Endsequenz, Statusinformationen, Fehlerkorrekturinformationen etc., um nur einige zu nennen.

Als aufgrund einer empfangenen Modulation korrekte Struktur eines Datenrahmens wird eine Struktur bezeichnet, in der alle Datenfelder, welche zu einem Datenrahmen gehören, gemäß einer ausgewerteten empfangenen Modulation, d.h. nach der Demodulation, vorhanden sind, unabhängig davon, ob deren Inhalt sinnvoll ist. Bezogen auf die Standardfamilie ISO/IEC 14443 ist die Struktur eines Datenrahmens im Teil 3 normiert.

Bevorzugte Ausführungsformen

Es wird ein Verfahren zum Betreiben eines Kartenlesegeräts (PCD) vorgeschlagen, welches die Schritte umfasst:

> Erzeugen eines Hochfrequenzmagnetfelds in einem Nahbereich des Kartenlesegeräts (PCD), wobei das Hochfrequenzmagnetfelds gesteuert wird, um eine Kommunikation mit einer kontaktlos auslesbaren Karteneinheit (PICC) auszuführen, und wobei bei einer Informationsübermittlung von dem Kartenlesegerät (PCD) zu einer in dem Nahbereich befindlichen kontaktlos auslesbaren Karteneinheit (PICC) eine Modulation des Hochfrequenzmagnetfelds ausgeführt wird;
>
> Auswerten des Hochfrequenzmagnetfelds, um eine Variation des Hochfrequenzmagnetfelds durch die in dem Nahbereich befindliche kontaktlos auslesbare Karteneinheit (PICC) zu erfassen und zu analysieren,
>
> wobei in einem Zeitbereich zwischen einem Empfang eines von der kontaktlos auslesbaren Karteneinheit (PICC) zu dem Kartenlesegerät (PCD) gesendeten Datenrahmens, der zumindest aufgrund der empfangenen Modulation, welche über die Variation des Hochfrequenzmagnetfelds durch die kontaktlos auslesbare Karteneinheit (PICC) bewirkt ist, eine korrekte Struktur aufweist, und einer nachfolgenden Informationsübermittlung von dem Kartenlesegerät (PCD) an die kontaktlos auslesbare Karteneinheit (PICC) die Magnetfeldstärke gegenüber einer Ausgangsmagnetfeldstärke auf eine vorfestgelegt abgesenkte Magnetfeldstärke abgesenkt wird, wobei die Ausgangsmagnetfeldstärke jene Magnetfeldstärke ist, mit welcher das seitens des Kartenlesegeräts nicht modulierte Hochfrequenzmagnetfeld während einer Informationsübermittlung zwischen dem Kartenlesegerät und der kontaktlos auslesbaren Karteneinheit erzeugt wird. Beispielsweise wird nach einem Übermitteln einer Information an die kontaktlos auslesbare Karteneinheit (PICC) und einem anschließenden korrekten Empfang einer Antwort von der kontaktlos auslesbaren Karte, welche über die Variation des Hochfrequenzmagnetfelds durch die kontaktlos auslesbare Karteneinheit (PICC) bewirkt ist, die Magnetfeldstärke gegenüber einer Ausgangsmagnetfeldstärke abgesenkt, mit welcher das seitens des Kartenlesegeräts nicht modulierte Hochfrequenzmagnetfeld während einer Informationsübermittlung zwischen dem Kartenlesegerät und der kontaktlos auslesbaren Karteneinheit erzeugt wird.

Ein Kartenlesegerät kann somit Energie in jenen Zeiten einsparen, in denen sich die kontaktlos auslesbare Karteneinheit ohnehin in einem Wartezustand befindet und die durch das Hochfrequenzmagnetfeld bei der Ausgangsmagnetfeldstärke bereitgestellte Energie nicht vollständig benötigt. Die kontaktlos auslesbare Karteneinheit wird somit gezielt in einen Niedrigenergiemodus versetzt, in dem nur die für die Kommunikationsverbindung notwendigen Daten gespeichert bleiben müssen. Die kontaktlos auslesbare Karteneinheit muss im Niedrigenergiemodus nicht in der Lage sein, Informationen von dem Kartenlesegerät zu empfangen oder Informationen an dieses zu senden. Lediglich eine minimale Aktivität ist erforderlich, die z. B. ein Zurücksetzen der kontaktlos auslesbaren Karteneinheit, z. B. bei einem erneuten Anheben der Magnetfeldstärke, verhindert, jedoch eine Reinitialisierung auslöst.

Ferner wird ein Kartenlesegerät für ein Kommunizieren mit einer kontaktlos auslesbaren Karteneinheit in einem Nahbereich des Kartenlesegeräts geschaffen, welche umfasst:

eine Steuereinheit,
eine mit der Steuereinheit verknüpfte steuerbare Sendeeinheit zum Erzeugen eines Hochfrequenzmagnetfelds in einem Nachbereich des Kartenlesegeräts, wobei eine Magnetfeldstärke des Hochfrequenzmagnetfelds steuerbar ist, um eine Kommunikation mit der kontaktlos auslesbaren Karteneinheit (PICC) auszuführen, und wobei die Sendeeinheit ausgebildet ist, für eine Informationsübermittlung von dem Kartenlesegerät zu einer in dem Nahbereich befindlichen kontaktlos auslesbaren Karteneinheit (PICC) eine Modulation des Hochfrequenzmagnetfelds auszuführen;
und eine mit der Steuereinheit verknüpfte Auswerteeinheit zum Auswerten des Hochfrequenzmagnetfelds, um eine Variation des Magnetfelds durch die in dem Nahbereich befindliche kontaktlos auslesbare Karteneinheit (PICC) zu erfassen und zu analysieren,
wobei die Steuereinheit (2) ausgebildet ist, in einem Zeitbereich zwischen einem Empfang eines von der kontaktlos auslesbaren Karteneinheit (PICC) zu dem Kartenlesegerät (PCD) gesendeten Datenrahmens, der zumindest aufgrund der empfangenen Modulation, welche über die Variation des Hochfrequenzmagnetfelds durch die kontaktlos auslesbare Karteneinheit (PICC) bewirkt ist, eine korrekte Struktur aufweist, und einer nachfolgenden Informationsübermittlung von dem Kartenlesegerät (PCD) an die kontaktlos auslesbare Karteneinheit (PICC) die Magnetfeldstärke gegenüber einer Ausgangsmagnetfeldstärke auf eine vorfestgelegt abgesenkte Magnetfeldstärke abzusenken, wobei die Ausgangsmagnetfeldstärke jene Magnetfeldstärke ist, mit welcher das seitens des Kartenlesegeräts nicht modulierte Hochfrequenzmagnetfeld während einer Informationsübermittlung zwischen dem Kartenlesegerät und der kontaktlos auslesbaren Karteneinheit erzeugt wird.

Ebenso wird eine kontaktlos auslesbare Karteneinheit geschaffen, welche umfasst:

einen Empfangsschaltkreis um Empfangen eines von einem Kartenlesegerät erzeugten Hochfrequenzmagnetfelds,
eine Gleichrichtereinheit zum Bereitstellen von elektrischer Energie, welche aus dem Hochfrequenzmagnetfeld extrahiert wird,
eine Demodulationseinrichtung, um auf das Hochfrequenzmagnetfeld seitens des Kartenlesegeräts modulierte Informationen demodulieren zu können,
einen steuerbaren Schalter zum Verändern einer Last oder einer Kapazität des Empfangsschaltkreises und gezielten Variieren des Hochfrequenzmagnetfelds auf diese Weise zum Übermitteln von Antwortinformationen an das Kartenlesegerät, sowie
eine Logikeinheit zum Auswerten der empfangenen demodulierten Informationen und Erzeugen von Antwortinformationen
wobei die kontaktlos auslesbare Karteneinheit in zwei sich hinsichtlich des Energiebedarfs unterscheidenden Betriebsmodi, einem Normalmodus und einem Niedrigenergiemodus, betreibbar ist.

Vorzugsweise ist die kontaktlos auslesbare Karteneinheit in einen Niedrigenergiemodus versetzbar ist, in dem zumindest ausgehandelte Kommunikationsparameter und/oder für eine aktuelle Kommunikationsverbindung spezifische Informationen gespeichert bleiben und in einem nachfolgenden Betreib im Normalmodus nutzbar sind.

Um nach dem Absenken der Magnetfeldstärke den Informations- und Datenaustausch mit der kontaktlos auslesbaren Karteneinheit wieder aufnehmen zu können, wird die Magnetfeldstärke wieder auf die Ausgangsmagnetfeldstärke angehoben. Um sicherzustellen, dass die Karteneinheit wieder voll einsatzfähig ist, ist bei einer Ausführungsform vorgesehen, dass die Magnetfeldstärke vor der nachfolgenden Informationsübermittlung von dem Kartenlesegerät zu der kontaktlos auslesbaren Karteneinheit wieder auf die Ausgangsmagnetfeldstärke erhöht wird und eine Modulation des Magnetfelds zum Bewirken der Informationsübermittlung erst beginnt, nachdem seit dem Erhöhen der Magnetfeldstärke auf die Ausgangsmagnetfeldstärke mindestens eine vorfestgelegte Reinitialisierungszeitspanne (T_re) verstrichen ist.

Ein Kartenlesegerät umfasst somit ein Zeitmodul, mit welchem ein Verstreichen der Reinitialisierungszeitspanne überwacht werden kann. Das Zeitmodul kann somit als Verzögerungsmodul ausgebildet sein oder ein solches umfassen. Dieses Zeitmodul kann in einer Steuereinheit des Kartenlesegeräts in Hardware oder in einer Kombination aus Hardware und Software ausgebildet sein.

Bei einer Ausführungsform einer kontaktlos auslesbaren Karteneinheit ist somit die Umschalteinrichtung ausgebildet, bei einem Feststellen eines erneuten Anhebens der Magnetfeldstärke auf die zuvor empfangene Ausgangsmagnetfeldstärke, eine Reinitialisierung der Karteneinheit, insbesondere der Logikeinheit, zu bewirken, wobei die Reinitialisierung die kontaktlos auslesbare Karteneinheit in einen funktionellen Zustand versetzt, welcher jenem vor dem Übergang in den Niedrigenergiezustand entspricht. Die kontaktlos auslesbare Karteneinheit ist somit nach der Reinitialisierung wieder so einsetzbar, als wäre der zwischenzeitliche Übergang in den Niedrigenergiemodus nicht erfolgt. In diesem Sinne ist eine Funktionalität des Gesamtsystems aus Kartenlesegerät und kontaktlos auslesbarer Karteneinheit durch das erfindungsgemäße Betriebsverfahren bei Verwendung eines erfindungsgemäßen Kartenlesegerät und einer erfindungsgemäßen kontaktlos auslesbaren Karteneinheit nicht gegenüber jenen Ausführungsformen eingeschränkt, die aus dem Stand der Technik bekannt sind.

Eine bevorzugte Ausführungsform sieht somit vor, dass die Karteneinheit, insbesondere deren Logikeinheit, nach dem Detektieren des erneuten Anheben der Magnetfeldstärke nicht neu initialisiert, sondern in den Funktionszustand vor dem Absenken der Magnetfeldstärke zurückversetzt wird, was Reinitialisierung genannt wird.

In der Regel sind die kontaktlos auslesbaren Karteneinheiten, welche ihre benötigte Energie dem Hochfrequenzmagnetfeld entziehen, so ausgebildet, dass die in einer Gleichrichterschaltung erzeugte Spannung stabilisiert wird. Hierbei wird einige elektrische Energie beispielsweise in einem Kondensator gespeichert. Die kontaktlos auslesbare Karteneinheit kann somit ihre Funktionen noch für eine Zeitspanne aufrechterhalten, nachdem die Magnetfeldstärke abgesenkt ist. Um jedoch sicherzustellen, dass die kontaktlos auslesbare Karteneinheit eine ausreichende Zeitspanne zur Verfügung hat, nach dem Senden einer Nachricht alle Schritte für eine notwendige Nachbearbeitung auszuführen, z.B. mit der Logikeinheit gekoppelte Schaltkreise über einen bevorstehenden Betrieb im Niedrigenergiemodus zu informieren, und sich in den Niedrigenergiemodus zu versetzen, ist bei einigen Ausführungsformen vorgesehen, dass das Absenken der Magnetfeldstärke um mindestens eine vorfestgelegte Nachbearbeitungszeitspanne ($\Delta$t_na) gegenüber dem korrekten Empfang der Informationsübermittlung von der kontaktlos auslesbaren Karteneinheit zu dem Kartenlesegerät verzögert wird. D.h. zwischen dem korrekten Empfang der Informationsübermittlung von der kontaktlos auslesbaren Karteneinheit zu dem Kartenlesegerät und dem Absenken der Magnetfeldstärke wird ein Verstreichen mindestens einer vorfestgelegten Nachbearbeitungszeitspanne ($\Delta$t_na) abgewartet. Das Absenken wird um die Nachbearbeitungszeitspanne gegenüber dem korrekten Empfang einer Antwort-Nachricht verzögert.

Bei einem Kartenlesegerät können das Zeitmodul oder ein weiteres Zeitmodul das Verstreichen der Nachbearbeitungszeitspanne überwachen. Das Zeitmodul oder das weitere Zeitmodul können jeweils eine Verzögerungsschaltung aufweisen oder umsetzen, die das Absenken der Magnetfeldstärke gegenüber dem Ende des korrekten Empfangs einer Information von der kontaktlos auslesbaren Karteneinheit verzögern.

Aufgrund der Stabilisierung der Spannungsversorgung in den kontaktlos auslesbaren Karteneinheiten muss nicht bei allen Ausführungsformen nach jedem Senden einer Antwortinformation eine Nachbearbeitung für ein Versetzen in den Niedrigenergiemodus und das Versetzen in den Niedrigenergiemodus eingeleitet werden. Einige Ausführungsformen von kontaktlos auslesbaren Karteneinheiten sehen vor, dass die Umschalteinrichtung ausgebildet ist, das Versetzen in den Niedrigenergiemodus zu bewirken, sobald eine Antwortinformation an das Kartenlesegerät übermittelt ist. Andere Ausführungsformen sehen vor, dass die Umschalteinrichtung ausgebildet ist, das Versetzen in den Niedrigenergiemodus zu bewirken, nachdem ein Absenken der Magnetfeldstärke erfasst ist. Somit ist vorgesehen, dass die Umschalteinrichtung ausgebildet ist, das Versetzen in den Niedrigenergiemodus zu bewirken, sobald eine Antwortinformation an das Kartenlesegerät übermittelt ist oder nachdem ein Absenken der Magnetfeldstärke erfasst ist.

Die vorfestgelegte abgesenkte Magnetfeldstärke wird gemäß einer Ausführungsform so festgelegt, dass die kontaktlos auslesbaren Karteneinheit bei der vorfestgelegten abgesenkten Magnetfeldstärke korrekt in einem Niedrigenergiemodus betreibbar ist.

Bei unterschiedlichen kontaktlos auslesbaren Karteneinheiten kann die benötigte Energie zur Aufrechterhaltung des Niedrigenergiemodus variieren. Ebenso ist die empfangene Magnetfeldstärke, das heißt die in einer Empfangsinduktion induzierte Spannung von einer Vielzahl von Umgebungsbedingungen, wie der Temperatur, der relativen Orientierung der kontaktlos auslesbaren Karteneinheit zum Kartenlesegerät, einem Abstand der kontaktlos auslesbaren Karteneinheit vom Kartenlesegerät usw. abhängig. Somit ist es vorteilhaft, einen Wert für die abgesenkte Magnetfeldstärke auszuhandeln. Dieser stellt somit einen Parameter für das Absenken der Magnetfeldstärke dar. Solche Parameter werden auch als Absenkungsparameter bezeichnet.

Eine Ausführungsform sieht daher vor, dass das Kartenlesegerät eine Anfrage zum Ermitteln von für die kontaktlos auslesbare Karteneinheit akzeptablen Absenkungsparametern an die kontaktlos auslesbare Karteneinheit übermittelt, und das Kartenlesegerät aus der erhaltenen Antwortinformation mindestens einen Absenkungsparameter extrahiert, der eine Angabe darüber enthält, welche absenkte Magnetfeldstärke für die kontaktlos auslesbare Karteneinheit akzeptabel ist, sodass diese korrekt im Niedrigenergiemodus betreibbar ist, und die vorfestgelegte abgesenkte Magnetfeldstärke entsprechend festgelegt wird.

Das Aushandeln kann auch beispielsweise ähnlich zu dem Aushandeln der sogenannten S(PARAMETER) gemäß dem Standard ISO/IEC14443-4/Amd 1 erfolgen.

Ein Aushandeln kann beispielsweise erfolgen, wenn eine Karteneinheit signalisiert, dass diese mit zu viel Energie versorgt wird. Einige Protokoll sehen Statusparameter vor, um dieses seitens der Karteneinheit zu signalisieren. Auch ein Ausbleiben einer Antwort auf eine Anfrage kann ein Aushandeln der Absenkungsparameter sinnvoll auslösen. Ein Aushandeln kann aber auch routinemäßig ausgeführt werden, insbesondere bei mobilen Kartenlesegeräten.

Bei einer Ausführungsform ist vorgesehen, dass mit der Anfrage zum Ermitteln der für die kontaktlos auslesbare Karteneinheit akzeptablen Absenkungsparameter an die kontaktlos auslesbare Karteneinheit ein oder mehrere angebotene Absenkungsparameter für die Magnetfeldstärke des Kartenlesegerätes angegeben werden. Die kontaktlos auslesbare Karteneinheit kann so erkennen, welche Möglichkeiten das Kartenlesegerät bietet.

Bei einer Ausführungsform werden aus der in der Antwortinformation der kontaktlos auslesbaren Karteneinheit (PICC) ein oder mehrere akzeptable Absenkungsparameter ermittelt, bei deren Verwendung die kontaktlos auslesbare Karteneinheit (PICC) im Niedrigenergiemodus korrekt betreibbar ist, und von dem Kartenlesegerät die Magnetfeldabsenkung so vorgenommen wird, dass die vorfestgelegte abgesenkte Magnetfeldstärke höher oder gleich als die niedrigste akzeptable Magnetfeldstärke gemäß den akzeptablen Absenkungsparametern der kontaktlos auslesbare Karteneinheit (PICC) ist. Hierdurch wird sichergestellt, dass eine Absenkung so erfolgt, dass die kontaktlos auslesbare Karteneinheit zuverlässig korrekt in dem Niedrigenergiemodus betreibbar ist.

Es kann vorgesehen sein, dass im Zuge des Aushandelns die von dem Kartenlesegerät gewählten Absenkungsparameter erneut an die kontaktlos auslesbare Karteneinheit übermittelt und gegebenenfalls auch von dieser noch einmal bestätigt werden. Dieses kann jeweils durch ein Übermitteln der jeweiligen Absenkungsparameter erfolgen.

Neben der Magnetfeldstärke können die Absenkungsparameter auch die Nachbearbeitungszeitspanne und/oder die Reinitialisierungszeitspanne und gegebenenfalls zusätzliche Parameter, die mit der Absenkung und dem Betrieb im Niedrigenergiemodus zusammenhängen, umfassen. In einer Ausführung kann auch ausgehandelt werden, dass einige Steuerbefehle und Antworten, die insbesondere verwendet werden, um die vordauernde Anwesenheit der kontaktlos auslesbaren Karteneinheit zu überwachen, nach wie vor ausgetauscht werden oder ausgetauscht werden können. Solche Steuerbefehle können Datenrahmen umfassen, die ein "Nicht-Verstanden" (NAK-not acknowleded) und ein "Verstanden" (ACK- acknowledge) umfassen. Solche Nachrichten oder Datenrahmen werden nach ISO/IEC 14443 als R-Blöcke (R-Blocks) bezeichnet. Werden auch die Nachbearbeitungszeitspanne und/oder die Reinitialisierungszeitspanne mit ausgehandelt, so kann eine Verzögerungszeit sowohl beim Absenken als auch insbesondere bei der erneuten Kommunikationsaufnahme optimiert, insbesondere reduziert, werden.

Die kontaktlos auslesbare Karteneinheit kann die Magnetfeldstärke in der Regel nicht absolut bestimmen, daher werden bei einer Ausführungsform zumindest die Absenkungsparameter, welche die Magnetfeldstärke betreffen, relativ, beispielsweise in Form von Teilerfaktoren, Prozentsätzen oder Ähnlichem angegeben. Das Kartenlesegerät kann angeben welche Absenkungsstufen es beherrscht, beispielsweise 80%, 60%, 50%, 40%, 25% der Ausgangsmagnetfeldstärke. Die kontaktlos auslesbare Karteneinheit kann dann anhand des aktuell zum Zeitpunkt der Aushandlung empfangen Hochfrequenzmagnetfelds, welches die Ausgangsmagnetfeldstärke aufweist, beispielsweise anhand der in die Empfangsinduktion oder in den Empfangsschwingkreis induzierten Spannung ermitteln, wie stark relativ zu der empfangenen Magnetfeldstärke die Magnetfeldstärke abgesenkt werden kann, um im Niedrigenergiemodus betrieben werden zu können. Da die induzierte Spannung linear mit der Magnetfeldstärke skaliert, führt eine Absenkung der Magnetfeldstärke um einen Reduktionsfaktor im Kartenlesegerät zu einer Reduktion der induzierten, d.h. empfangenen Spannung, um denselben Reduktionsfaktor. Eine Halbierung (Reduktionsfaktor gleich ½) der Magnetfeldstärke führt zu einer Halbierung der induzierten Spannung in der Empfangsinduktion, d.h. der Empfangsantenne, der kontaktlos auslesbare Karteneinheit. Eine Ausführungsform sieht daher vor, dass die Absenkungsparameter die Magnetfeldstärke jeweils relativ zur aktuell erzeugten oder empfangenen Ausgangsmagnetfeldstärke angegeben werden.

Die kontaktlos auslesbare Karteneinheit kann auf unterschiedliche Arten ermitteln, mit wieviel Energie diese aktuell versorgt wird, und wieviel sie relativ zum Ist-Zustand für den Niedrigenergiemodus benötigt.

Eine andere Ausführungsform kann vorsehen, dass die Feldstärken, mit denen die kontaktlos auslesbare Karteneinheit betreibbar ist, absolut angegeben werden.

Eine Ausführungsform einer kontaktlos auslesbare Karteneinheit sieht somit vor, dass anhand der empfangenen Magnetfeldstärke ein oder mehrere Absenkungsparameter ermittelt werden, welche akzeptable sind, so dass bei deren Verwendung durch das Kartenlesegerät ein korrekter Betrieb der kontaktlos auslesbaren Karteneinheit im Niedrigenergiemodus möglich ist, und dieser eine oder diese mehreren akzeptablen Absenkungsparameter an das Kartenlesegerät im Rahmen einer Absenkungsparameteraushandlung übermittelt werden.

Um zu verhindern, dass Karteneinheiten, die nicht den Niedrigenergiemodus beherrschen, nicht abgeschaltet werden, sieht eine Ausführungsform vor, dass das Kartenlesegerät prüft, ob mehrere( insbesondere noch eine zweite kontaktlos auslesbare Karteneinheit, die den Niedrigenergiemodus nicht beherrscht) in dem Hochfrequenzmagnetfeld vorhanden ist, was z.B. gemäß ISO/IEC 14443 beim Abarbeiten eines sogenannten Antikollisionsalgorithmus am Beginn oder vor dem Beginn einer Kommunikationsverbindung getestet wird. Falls mehrere Karteneinheiten in dem Hochfrequenzmagnetfeld vorhanden sind, wird eine Absenkung der Magnetfeldstärke unterlassen, damit alle Karteneinheiten, also auch solche die gegebenenfalls nicht im Niedrigenergiesparmodus oder nicht bei denselben Bedingungen betreibbar sind, funktionsfähig bleiben.

Vorzugsweise erfolgt das Absenken der Magnetfeldstärke nur, wenn die empfangene Antwort als gemäß einem zur Kommunikation verwendeten Protokoll eine formal korrekte Nachricht, beispielsweise gemäß dem Standard ISO/IEC 14443-4 als ein formal korrekter Datenrahmen oder Datenframe (englisch frame), beispielswese ein Datenrahmen mit einer korrekten Anwendungsprotokolldateneinheit (englisch Applikation Protocol Data Unit - APDU) als Inhalt erkannt wird. Hierdurch wird verhindert, dass ein Absenken stattfindet, wenn die Kommunikationsbedingungen nicht optimal sind.

Vorzugsweise wird bei einigen Ausführungsformen die Kommunikation zwischen dem Kartenlesegerät und der kontaktlos auslesbaren Karteneinheit zumindest auf physikalischer Ebene gemäß der Norm ISO/IEC 14443 ausgeführt. Hierauf aufbauend können verschiedene Kommunikationsstandards umgesetzt werden.

Bei einer bevorzugten Ausführungsform ist die Steuereinheit des Kartenlesegeräts so ausgebildet, dass sie die gesamte Kommunikation zwischen dem Kartenlesegerät und der kontaktlos auslesbaren Karteneinheit steuert. Dieses bedeutet, dass die Steuereinheit auch Programme auf hohen Kommunikationsebenen in Anlehnung an ein OSI-Modell ausführt.

Nachfolgend wird die Erfindung unter Bezugnahme auf eine Zeichnung näher erläutert. Hierbei zeigen:

Fig. 1 eine schematische Darstellung einer Ausführungsform eines Kartenlesegeräts;

Fig. 2 schematische Darstellung der Übermittlungsaktivitäten eines Kartenlesegeräts und einer kontaktlos auslesbaren Karteneinheit sowie einer von dem des Kartenlesegerät erzeugten Magnetfeldstärke jeweils aufgetragen gegenüber der Zeit; und

Fig. 3 ein schematisches Ablaufdiagramm eines Kommunikationsprozesses.

In der folgenden Figurenbeschreibung wird die Erfindung anhand von Ausführungsbeispielen beschreiben, die sich an der Standardfamilie ISO/IEC 14443 orientieren. Als kontaktlos auslesbare Karteneinheiten werden kontaktlos auslesbare Karten beschrieben. Analog gilt das Beschriebene auch für andersartig ausgebildete kontaktlos auslesbare Karteneinheiten, bei denen die Funktionalität beispielsweise in einem mobilen Gerät umgesetzt ist, welches ein Verhalten wie eine kontaktlos auslesbare Karte gemäß dem Standard ISO/IEC 14443 zeigt. Das Beschriebene gilt analog auch für andere Nahfeldkommunikationsstandards oder Varianten des ISO/IEC 1443 Standards, die hier nicht explizit beschrieben sind.

In Fig. 1 ist schematisch ein Kartenlesegerät 1 dargestellt. Das Kartenlesegerät 1 umfasst eine Steuereinheit 2, die eine Funktionsweise des Kartenlesegeräts 1 steuert. Die Steuereinheit 2 umfasst in der Regel einen Mikroprozessor, einen Speicher sowie darin abgelegte Software, die auf dem Mikroprozessor ausführbar ist. Diese Unterkomponenten der Steuereinheit 2 sind aus Gründen der Vereinfachung nicht dargestellt. Die Steuereinheit ist ausgebildet, eine Sendeeinheit 3, welche durch eine Strichpunktlinie dargestellt ist, zu steuern. Die Sendeeinheit 3 ist so ausgebildet, dass diese ein Hochfrequenzmagnetfeld in einem Nahbereich des Kartenlesegeräts 1 erzeugen kann.

Ferner ist die Sendeeinheit 3 so ausgebildet, dass sie gesteuert durch die Steuereinheit 2 eine Modulation der Magnetfeldstärke zum Übermitteln von Informationen ausführen kann. Die Sendeeinheit 2 umfasst hierfür eine Modulationseinheit 4. Die Modulationseinheit 4 ist beispielsweise so ausgebildet, dass diese eine Modulation des Signals gemäß der Norm ISO/IEC 14443 Typ B ausführen kann. Die Modulationseinheit 4 kann bei einigen Ausführungsformen auch so ausgebildet sein, dass sie gesteuert durch die Steuereinheit 2 auch andere Modulationsverfahren ausführen kann. Um eine unmodulierte Magnetfeldstärke a und eine modulierte Magnetfeldstärke b beeinflussen zu können, sind bei der dargestellten Ausführungsform ein Impedanzregister für die modulierte Magnetfeldstärke 5 und ein Impedanzregister für die unmodulierte Magnetfeldstärke 6 vorgesehen. Über die Werte, die über die Steuereinheit 2 festgelegt werden können, wird durch die Modulationseinheit 4 entsprechend der Modulation ein Wert eines Ausgangsimpedanzregisters 7 gesetzt. Der Wert des Ausgangsimpedanzregisters 7 legt die Ausgangsimpedanz einer Treibereinheit 8 fest. Diese verstärkt ein Signal eines Oszillators 9, der mit einer Trägerfrequenz, beispielsweise 13,56 MHz schwingt, und erzeugt ein Sendesignal. Das Sendesignal wird über eine Filtereinheit 10 auf eine Sendeantenne 11 gegeben. Die Sendeantenne 11 ist vorzugsweise als Sendeinduktion mit einer Leiterschleife ausgebildet.

Im Stand der Technik sind auch andere Ausführungsformen bekannt, wie die Modulationsstärke oder genauer ausgedrückt die Magnetfeldstärke geregelt werden kann. Moderne Mikrochips verwenden eine Stromsteuerung, sodass eine Ausgangsimpedanz der Treibereinheit konstant bleibt, sodass immer eine optimale Impedanzanpassung an die Sendeantenne oder Sendeinduktion gewährleistet ist.

Im Stand der Technik wird an der Sendeantenne über eine Aufbereitungsschaltung zusätzlich ein Empfangssignal abgegriffen, über das eine Variation des erzeugten Hochfrequenzmagnetfelds durch eine kontaktlos auslesbare Karte (nicht dargestellt) im Nahbereich des Kartenlesegeräts während einer Informationsübermittlung von der kontaktlos auslesbaren Karten zu dem Kartenlesegerät erfasst werden kann.

Bei der hier dargestellten Ausführungsform ist eine Auswerteeinheit 12 vorgesehen, welche durch eine Strich-Doppelpunkt-Linie dargestellt ist. Die Auswerteeinheit 12 ist mit einer Empfangsantenne 13 gekoppelt, welche vorzugsweise als Empfangsinduktion mit einer Leiterschleife ausgebildet ist. Das durch das Hochfrequenzmagnetfeld, welches von der Sendeeinheit 3 erzeugt ist, induzierte Hochfrequenzmagnetfeldsignal wird über eine Aufbereitungsschaltung 14 der Auswerteeinheit 12 für eine weitere Verarbeitung aufbereitet. Dieses empfangene Hochfrequenzmagnetfeldsignal kann einerseits einer Demodulationseinheit 15 zugeführt werden, die eine Demodulation gemäß dem Standard ISO/IEC 14443 Typ B vornimmt und die erhaltenen Informationen in Form von Daten an die Steuereinheit ausgibt. Zusätzlich wird das aufbereitete empfangene Hochfrequenzmagnetfeldsignal bei der hier beschriebenen Ausführungsform einer Messschaltung 16 zugeführt, die jeweils eine aktuelle Magnetfeldstärke des Hochfrequenzmagnetfelds repräsentierende Werte ermittelt. Es versteht sich für den Fachmann, dass die Magnetfeldstärke des Hochfrequenzmagnetfelds mit der Trägerfrequenz des Hochfrequenzmagnetfelds oszilliert. Das Hochfrequenzmagnetfeldsignal wiederum oszilliert mit der Frequenz des Hochfrequenzmagnetfelds. Ein Spitze-zu-Spitze-Wert der Amplitude des Hochfrequenzmagnetfeldsignals ist ein Maß für die Magnetfeldstärke des Hochfrequenzmagnetfelds. Somit kann das Hochfrequenzmagnetfeldsignal als ein Maß für die Magnetfeldstärke des Hochfrequenzmagnetfelds angesehen werden. Die Messschaltung 16 ermittelt jeweils einen aktuellen die Magnetfeldstärke repräsentierenden Wert anhand des Hochfrequenzmagnetfeldsignals.

Hierzu wird die Spannung des empfangenen Hochfrequenzmagnetfeldsignals analysiert. Da eine Amplitudenumtastung mit einer Frequenz vorgenommen wird, die geringer als die Trägerfrequenz des Hochfrequenzmagnetfelds ist, kann die Magnetfeldstärke durch eine zeitliche Mittelung einer oder mehrerer Halbwellen des induzierten Magnetfeldsignals ermittelt werden. Es ist vorteilhaft, die positiven und negativen Halbwellen jeweils beide getrennt auszuwerten. In einer Detektionsschaltung 17 wird beispielsweise eine solche Mittelung ausgeführt. Diese Schaltung ist vorzugsweise als analoge Schaltung ausgebildet. Ein nachgeschalteter Analog-Digitalwandler 18 stellt die Werte für die ermittelten Magnetfeldstärken für die Steuereinheit 2 bereit. Diese ist ausgebildet, anhand der empfangenen Werte einen gemessenen Modulationsindex aus den Werten zu bestimmen, die gemessen wurden, während das Hochfrequenzmagnetfeld unmoduliert und moduliert ist. Der ermittelte Modulationsindex $m_{gemessen}$ wird mit einem vorgegebenen Modulationsindex $m_{Vorgabe}$ verglichen. Der Vergleich wird vorteilhafterweise so ausgeführt, dass überprüft wird, ob der gemessene Modulationsindex $m_{gemessen}$ in einem Toleranzbereich um den vorgegebenen Modulationsindex liegt. Dieser Toleranzbereich kann, muss jedoch nicht, symmetrisch ausgebildet sein. Liegt der ermittelte Modulationsindex nicht innerhalb des Toleranzbereichs um den vorgegebenen Modulationsindex, so ändert die Steuereinheit 2 die Vorgabewerte in dem Impedanzregister für die modulierte Magnetfeldstärke 5 und/oder im Impedanzregister für die unmodulierte Magnetfeldstärke 6.

Die Vorgabewerte für den Modulationsindex sowie für die Begrenzungswerte des Toleranzbereichs $\delta t_1$, $\delta t_2$ können fest vorgegeben sein oder bei einigen Ausführungsformen über eine Schnittstelle 19 erfasst bzw. eingegeben werden. Über die Schnittstelle 19 können ebenfalls Daten, die zu der kontaktlos auslesbaren Karte übermittelt werden sollen oder von dieser empfangen worden sind, ausgetauscht werden. Bei der Schnittstelle 19 kann es sich um eine Kommunikationsschnittstelle oder eine Benutzerschnittstelle, die beispielsweise in Form eines Terminals, eines Touchscreens mit einer grafischen Benutzeroberfläche usw. handeln.

Durch geeignete Wahl der Messschaltung 16 bzw. Detektionsschaltung 17 kann erreicht werden, dass der Modulationsindex während eines Kommunikationsprozesses, bei dem Daten zu der kontaktlos auslesbaren Karte übermittelt werden, nachgeregelt bzw. gesteuert wird. Bei anderen Ausführungsformen ist jedoch vorgesehen, dass alternativ oder zusätzlich eine Anpasssesequenz ausgeführt wird.

Bei bevorzugten Ausführungsformen wird die Modulation und Demodulation sowie die Signalerzeugung für ein Sendesignal in einem integrierten Chip 20 ausgeführt. Dieser ist durch eine gepunktete Linie angedeutet. Bei anderen Ausführungsformen kann auch die Messschaltung 17 mit in den Chip 20 integriert werden. In einem solchen Fall kann die Funktionalität des Nachregelns des Modulationsindexes auch von der Steuereinheit auf den Chip übermittelt werden. Bei anderen Ausführungsformen wird das Signal für die Demodulation nicht an der Empfangsantenne, sondern an der Transmissionsantenne abgegriffen. Hierfür kann eine gesonderte Aufbereitungsschaltung vorgesehen sein. Bei wieder anderen Ausführungsformen kann die Aufbereitungsschaltung 14 zwischen der Empfangsantenne 13 und der Messschaltung 16 und/oder der Demodulationseinheit 15 entfallen.

Die Schnittstelle 19 wird auch genutzt, um das Kartenlesegerät mit anderen Einrichtungen, beispielsweise einem Computer oder einem Computernetzwerk (beide nicht dargestellt) zu koppeln und die Funktionalität eines Systems bestehend aus einem Kartenlesegerät und einer kontaktlos auslesbaren Karte für Anwendungen wie Banktransaktionen, eine Authentifizierung von Personen für andere Vorgänge, eine Nutzung von kryptografischen Schlüsseln, welche auf der kontaktlos auslesbaren Karte gespeichert sind etc. zu verwenden.

Die Steuereinheit 2 ist ferner ausgebildet, mit der kontaktlos auslesbaren Karte mögliche Absenkungsparameter auszuhandeln und anschließend an eine korrekt erfasste übermittelte Antwort eine Absenkung der Magnetfeldstärke des Hochfrequenzmagnetfelds zu bewirken. Bei einer bevorzugten Ausführungsform prüft die Steuereinheit 2, ob auf einen übermittelten Datenrahmen, welcher auch als Frame bezeichnet wird, der eine Dateneinheit eines Anwendungsprotokolls enthält, beispielsweise eine sogenannte Application Protocol Data Unit (APDU) gemäß dem Protokollstandard ISO/IEC 14443-4 eine entsprechende Antwort erhalten wird. APDU werden als standardisierter Inhalt eines Datenrahmens verwendet. Datenrahmen werden häufig mit dem Inhalt bezeichnet. Ein Datenrahmen, der eine APDU enthält wird daher verkürzt häufig auch einfach mit APDU bezeichnet. Datenrahmen enthalten auch I-Blöcke und werden somit auch verkürzt als I-Blöcke oder frames bezeichnet. Im Folgenden wird mit APDU, Kommando-APDU oder Antwort-APDU jeweils ein Datenrahmen bezeichnet, der eine APDU enthält. Die Begriffe "Kommando" und "Antwort" werden genutzt, um Anfragen des Kartenlesegeräts von Antworten der kontaktlos auslesbaren Karte unterscheiden zu können. Die Steuereinheit prüft somit, ob nach dem Senden einer Kommando-APDU an die kontaktlos auslesbare Karte anschließend eine korrekte Antwort-APDU, d.h. ein korrekter Antwortrahmen gemäß dem Protokoll, empfangen wurde. Ist dies der Fall und sind die Daten über die Schnittstelle 19 an eine andere Anwendung weitergereicht worden, so leitet die Steuereinheit 2 eine Absenkung der Magnetfeldstärke ein, die gemäß den zuvor ausgehandelten Absenkungsparametern geeignet ist, um die kontaktlos auslesbare Karte in einem Niedrigenergiemodus korrekt zu betreiben. Das Absenken kann beispielsweise dadurch erreicht werden, dass das Impedanzregister für die unmodulierte Magnetfeldstärke 6 entsprechend gesetzt wird.

Eine Applikationsdateneinheit ist ein möglicher Inhalt eines Datenrahmens. Wird geprüft, ob ein korrekter, eine APDU enthaltender Datenrahmen vorliegt, eine Prüfung gemäß dem OSI-Modell bereits auf einer Schichtebene 4 oder höher statt. Bei einer einfachen Ausführungsform, bei der ein Inhalt des Datenrahmens der empfangen wird nicht analysiert wird, wird lediglich geprüft, ob der empfangene Datenrahmen hinsichtlich seiner Struktur, d.h. z. B. der Bitanzahl, einen korrekten Datenrahmen gemäß dem verwendeten Protokoll für den Informationsaustausch darstellt. Dieses umfasst auch beispielsweise die Prüfung, ob die Start- und/oder Stoppbits korrekt sind, eine Fehlerkorrektur auf Datenübermittlungsebene etc.

In Fig. 2 ist am oberen Bereich eine Zeitskala 101 schematisch dargestellt. In der Mitte der Figur ist eine grafische Auftragung einer Magnetfeldstärke 110 gegenüber der Zeit gezeigt. Im unteren Bereich sind als binäre Darstellungen schematisch die Sendeaktivitäten 120 eines Kartenlesegeräts (PCD) und darunter eine Sendeaktivität 130 einer kontaktlos auslesbaren Karte (PICC) auch jeweils gegenüber derselben Zeitskala 101 dargestellt. Verschiedene für eine Erläuterung eines Ablaufs eines Kommunikationsverfahrens bzw. eines Verfahrens zum Betreiben eines Kartenlesegeräts benötigte Zeitpunkte sind durch senkrechte gestrichelte Linien angedeutet. Die entsprechenden Zeitpunkte sind mit t1 bis t7 gekennzeichnet.

Es wird davon ausgegangen, dass der dargestellte Ausschnitt der Zeitskala einen Bereich darstellt, zu dem zwischen dem Kartenlesegerät und der kontaktlos auslesbaren Karte bereits eine Kommunikationsverbindung etabliert ist und sowohl die notwendigen Parameter, welche eine Übertragungsrate und Ähnliches betreffen, als auch verwendete Absenkungsparameter, welche eine Absenkung der Magnetfeldstärke betreffen, zwischen dem Kartenlesegerät und der kontaktlos auslesbaren Karte bereits ausgehandelt sind.

Das von dem Kartenlesegerät erzeugte Hochfrequenzmagnetfeld, welches beispielsweise eine Frequenz von 13,56 MHz aufweist, weist eine Ausgangsmagnetfeldstärke 111 auf, welche auch als H_int, also als initiale Feldstärke bezeichnet wird. Dieser Ausgangsmagnetfeldstärke wird ein Prozentwert von 100 % zugeordnet. Diese Ausgangsmagnetfeldstärke 111 ist jene Magnetfeldstärke, die von dem Kartenlesegerät während der Kommunikation erzeugt wird, ohne dass eine Modulation zur Informationsübermittlung seitens des Kartenlesegeräts oder seitens der kontaktlos auslesbaren Karte vorgenommen wird. In der schematischen Darstellung der Fig. 2 sind Einflüsse der Modulation zur Informationsübermittlung auf die Magnetfeldstärke 110 nicht dargestellt.

Es versteht sich ferner für den Fachmann, dass die Magnetfeldstärke des Hochfrequenzmagnetfelds mit der Trägerfrequenz des Hochfrequenzmagnetfelds oszilliert. Gezeigt ist jedoch eine Einhüllende der Maximalwerte dieser Oszillation. Wenn von der Magnetfeldstärke gesprochen wird, ist immer ein Effektivwert oder ein Wert, der durch eine solche Einhüllende beschrieben wird, gemeint.

Zum Zeitpunkt t1 sendet das Kartenlesegerät (PCD) an die kontaktlos auslesbare Karte (PICC) einen Datenrahmen (englisch data frame), der eine Applikationsprotokolldateneinheit (APDU) enthält. Das Aussenden ist zum Zeitpunkt t2 beendet. Auf diese sogenannte Befehls- oder Kommando-APDU antwortet die kontaktlos auslesbare Karte (PICC) mit einem Antwortframe, der eine Antwort-APDU enthält. Diese Übermittlung startet im Zeitpunkt t3 und endet im Zeitpunkt t4. Nachdem das Kartenlesegerät (PCD) die Antwort der kontaktlos auslesbaren Karte (PICC) korrekt erhalten hat, wartet dieses eine vorfestgelegte, insbesondere ausgehandelte, Nachbearbeitungszeitspanne $\Delta t_na$ ab, bis es die Magnetfeldstärke im Zeitpunkt t5 auf eine abgesenkte Magnetfeldstärke 112, welche im dargestellten Beispiel 50 % der Ausgangsmagnetfeldstärke 111 beträgt, absenkt.

Die Kontaktlos auslesbare Karte (PICC) wird entweder nach dem Aussenden der Antwort-APDU zum Zeitpunkt t4 oder nach dem Absenken der Magnetfeldstärke 110 zum Zeitpunkt t5 in einen Niedrigenergiemodus überführt. In diesem Niedrigenergiemodus muss aber kann die kontaktlos auslesbare Karte nicht mehr in der Lage sein Modulationen des Frequenzmagnetfelds zu demodulieren oder zu erfassen und auch ansonsten keine Funktionalität mehr bereitstellen, die über ein Speichern und Vorhalten jener Daten hinausgeht, die für ein reibungsloses Fortsetzen der bestehenden Kommunikationsverbindung zu einem späteren Zeitpunkt notwendig sind. Eine Funktionalität besteht somit darin, dass die kontaktlos auslesbare Karte (PICC) in der Lage sein muss, zu erkennen, dass die Kommunikationsverbindung nicht unterbrochen ist, sondern lediglich im Niedrigenergiemodus seitens der kontaktlos auslesbaren Karte fortgesetzt wird. Darüber hinaus verfügt die kontaktlos auslesbare Karte über die Fähigkeit, ein erneutes Anheben der Magnetfeldstärke auf die Ausgangsmagnetfeldstärke 111 zu erkennen und die kontaktlos auslesbare Karte (PICC) wieder in einen funktionalen Zustand zu versetzen, wie er vor dem Absenken der Magnetfeldstärke im Zeitpunkt t4 beziehungsweise t5 vorherrschte.

Erhält das Kartenlesegerät (PCD) eine Anforderung, die Kommunikation mit der kontaktlos auslesbaren Karte (PICC) fortzusetzen oder möchte es dieses aus eigenem Antrieb tun, so hebt es die Magnetfeldstärke 110 des Hochfrequenzmagnetfelds erneut auf die Ausgangsmagnetfeldstärke 111 an, wie dies zum Zeitpunkt t6 gezeigt ist. Um der kontaktlos auslesbaren Karte die Möglichkeit zu geben, sich in den voll funktionsfähigen Zustand zurückzuversetzen, d. h. reinitialisiert zu werden, wartet das Kartenlesegerät (PCD) eine Reinitialisierungszeitspanne $\Delta t_re$ ab, bis es eine erneute Übermittlung von Daten in einem Datenrahmen, beispielsweise mit einer weiteren Anwendungsprotokolldateneinheit, d. h. beispielsweise einer Kommando-APDU als Inhalt, fortsetzt, wie dies zum Zeitpunkt t7 angedeutet ist.

Das hier beschriebene Verfahren zum Betreiben eines Kartenlesegeräts bzw. einer kontaktlos auslesbaren Karte kann in jedes übergeordnete Übermittlungsverfahren eingefügt werden und Bestandteil eines solchen sein und bewirkt, dass die benötigte Sendeenergie deutlich reduziert werden kann. Insbesondere bei Anwendungen, bei denen übergeordnete Prozesse und Vorrichtungen, die mit dem Kartenlesegerät gekoppelt sind, Daten, die zwischen dem Kartenlesegerät (PCD) und der kontaktlos auslesbaren Karte (PICC) ausgetauscht sind, verarbeiten, können lange Zeiten oder Zeitbereiche auftreten, in denen die Kommunikationsverbindung quasi nur gehalten wird und in denen kein inhaltlicher Datenaustausch zwischen Kartenlesegerät (PCD) und der kontaktlos auslesbaren Karte (PICC) stattfindet. In dem dargestellten Ausführungsbeispiel ist dieses ein Zeitbereich 140 zwischen den Zeitpunkten t4 und t7 bzw. t5 und t6, wenn man berücksichtigt, dass bereits zum Zeitpunkt t6 eine Anforderung für eine erneute Kommunikation mit der kontaktlos auslesbaren Karte vorliegt. In der Regel wird jedoch, anders als die Darstellung der Figur 2 vermuten lässt, die Zeitspanne zwischen den Zeitpunkten t5 und t6 erheblich größer als die Nachbearbeitungszeitspanne $\Delta t_na$ und die Reinitialisierungszeitspanne $\Delta t_re$ sein.

Bei einigen Ausführungsformen kann die Nachbearbeitungszeitspanne $\Delta t_na$ stark verkürzt werden oder wegfallen, da nur eine geringe Zeit zur Nachbearbeitung eines Sendevorgang benötigt wird und/oder die Energieversorgung der kontaktlos auslesbare Karteneinheit eine hohe Pufferkapazität zur Speicherung elektrischer Energie ausweist. Eine Nachbearbeitung des Sendevorgangs und eine Versetzen in den Niedrigenergiemodus kann mit der gespeicherten Energie vorgenommen werden.

Im Folgenden wird auf die Aushandlung von Absenkungsparametern, insbesondere der Absenkungsparameter für die abgesenkte Magnetfeldstärke, eingegangen. An der Ordinate, d.h. der Magnetfeldstärkenskala 150 des mittleren Graphen in Fig. 2 sind auf der linken Seite als angebotene Absenkungsparameter 160 angebotene Absenkungsstufen 161 bis 165 mittels leerer Kreise eingezeichnet, die jenen Absenkungsstufen entsprechen, die das Kartenlesegerät bezogen auf die Ausgangsmagnetfeldstärke erzeugen kann. Dies sind 80 % für die angebotene Absenkungsstufe 161, 60 % für die angebotene Absenkungsstufe 162, 50 % für die angebotene Absenkungsstufe 163, 30 % für die angebotene Absenkungsstufe 164 und 20 % für die angebotene Absenkungsstufe 165. Die Prozentangaben sind jeweils auf die Ausgangsmagnetfeldstärke 111 bezogen. Diese möglichen Absenkungsstufen 161 bis 165 bzw. Absenkungsfaktoren werden beim Aushandeln vom dem Kartenlesegerät an die kontaktlos auslesbare Karte (PICC) übermittelt.

Die kontaktlos auslesbare Karte ist in der Lage im Niedrigenergiemodus korrekt betrieben zu werden, wenn die Ausgangsmagnetfeldstärke auf 75 % für die akzeptable Absenkungsstufe 171, 60 % für die akzeptable Absenkungsstufe 172 oder 50 % für die akzeptable Absenkungsstufe 173 abgesenkt wird. Über leere Rauten sind somit rechts der Magnetfeldstärkeskala 150 die akzeptablen Absenkungsparameter 170 der kontaktlos auslesbaren Karte angedeutet. Diese Absenkungsstufen werden als akzeptable Absenkungsparameter von der kontaktlos auslesbaren Karte an das Kartenlesegerät zurück übermittelt. Bei einigen Ausführungsformen werden nur die angebotenen Absenkungsparameter an das Kartenlesegerät als akzeptable Absenskungsparameter zurück übermittelt, bei denen eine Übereinstimmung zwischen den zu der kontaktlosen Karte von dem Kartenlesegerät übermittelten angebotenen Absenkungsparametern, hier den angebotenen Absenkungsparametern bzw. angebotenen Absenkungsstufen 162, 163, zu denen übereinstimmende akzeptable Absenkungsparameter der kontaktlos auslesbaren Karte, hier die akzeptablen Absenkungsstufen 172, 173, existieren. Das Kartenlesegerät wählt die niedrigste mögliche Absenkung, d.h. jene Absenkungsparameter, die zu der niedrigsten Magnetfeldstärke des Hochfrequenzmagnetfelds führen, die mit den akzeptablen Absenkungsparametern 170 der kontaktlos auslesbaren Karte (PICC) in Übereinstimmung sind, sodass die kontaktlos auslesbare Karte (PICC) im Niedrigenergiemodus korrekt betrieben werden kann. Die Kreise geben somit die angebotenen Absenkungsstufen bzw. Absenkungsparameter 160 hinsichtlich der Magnetfeldstärke, d.h. die angebotenen relativen Magnetfeldstärken, an und die rechts der Magnetfeldstärkeskala 150 angezeigten Rauten die akzeptablen Absenkungsparameter 170 bzw. akzeptablen relativen Magnetfeldstärken an.

In Fig. 3 ist exemplarisch ein Ablaufdiagramm eines Verfahrens zum Betreiben eines Kartenlesegeräts beschrieben. Erneut wird davon ausgegangen, dass bereits eine Kommunikationsverbindung zwischen dem Kartenlesegerät und der kontaktlos auslesbaren Karte etabliert ist, um Daten der kontaktlos auslesbaren Karte für eine externe Anwendung nutzbar zu machen. In einem Verfahrensschritt 201 sendet das Kartenlesegerät Absenkungsparameter an die kontaktlos auslesbare Karte. Die Absenkungsparameter können angebotene Absenkungsstufen, angebotene Nachbearbeitungszeitspannen und angebotene Reinitialisierungszeitspannen umfassen. Die kontaktlos auslesbare Karte antwortet, indem sie die akzeptablen Absenkungsparameter sendet. Die akzeptablen Absenkungsparameter können akzeptable Absenkungsstufen, benötigte und/oder akzeptable Nachbearbeitungszeitspannen oder benötigte und/oder akzeptable Reinitialisierungszeitspannen umfassen. Das Kartenlesegerät wählt als vorfestgelegte abgesenkte Magnetfeldstärke die Magnetfeldstärke gemäß der niedrigsten angebotenen Absenkungsstufe, die mit der niedrigsten akzeptablen Absenkungsstufe verträglich ist 203. Ferner legt das Kartenlesegerät eine vorfestgelegte Reinitialisierungszeitspanne gemäß den ausgetauschten Absenkungsparametern fest 204. Ähnlich verfährt das Kartenlesegerät mit der Reinitialisierungszeitspanne und legt diese gemäß den ausgetauschten Absenkungsparametern fest 205. Anschließend wird in einen Betriebszustand übergegangen, in dem inhaltlich Daten zwischen dem Kartenlesegerät und der kontaktlos auslesbaren Karte ausgetauscht werden. Im Verfahrensschritt 206 wird geprüft, ob eine sogenannte Kommando-APDU von einer Anwendung übermittelt ist. Ist dies nicht der Fall, so wird zu dieser Abfrage zurück verzweigt 207. Eine Kommando-APDU wird hier stellvertretend für eine beliebige in einem Datenrahmen zu übertragende Information angesehen. Wurde eine Kommando-APDU von einer externen Anwendung an das Kartenlesegerät übermittelt, so wird überprüft, ob die Magnetfeldstärke des Hochfrequenzmagnetfelds mit der Ausgangsmagnetfeldstärke übereinstimmt 209. Ist dies nicht der Fall, wird gemäß der Verzweigung 210 die Magnetfeldstärke auf die Ausgangsmagnetfeldstärke angehoben 211 und anschließend eine Reinitalisierungszeitspanne abgewartet 212. Anschließend wird ebenso wie bei der Verzweigung 213 der Abfrage 209, d.h., wenn die Ausgangsmagnetfeldstärke bereits anliegt, das Hochfrequenzfeld moduliert, um die Kommando-APDU zu der kontaktlos auslesbaren Karte zu senden 214. Anschließend wird das Hochfrequenzmagnetfeld im Hinblick auf Variationen analysiert, welche von der kontaktlos auslesbaren Karte verursacht sind, und eine Antwort-APDU extrahiert und an die externe Anwendung weitergeleitet 215. In der Abfrage 216 wird geprüft, ob eine korrekte Antwort-APDU nach einer Kommando-APDU erhalten wurde. Auch eine Antwort-APDU wird hier nur als Beispiel für eine Information verwendet, die in einem Datenrahmen übermittelt wird oder übermittelbar ist. Ist eine korrekte Antwort-APDU erhalten worden, so wird gemäß der Verzweigung 217 eine Nachbearbeitungszeitspanne abgewartet 218 und anschließend die Magnetfeldstärke auf die vorfestgelegte abgesenkte Magnetfeldstärke abgesenkt 219. Anschließend wird das Verfahren mit dem Verfahrensschritt 206 fortgesetzt, in dem geprüft wird, ob eine neue Kommando-APDU von der externen Anwendung übermittelt ist. Wurde keine korrekte Antwort-APDU erhalten und dieses im Verfahrensschritt 216 festgestellt, so wird gemäß dem Nein-Zweig 220 ebenfalls mit dem Verfahrensschritt 206 fortgefahren.

Es versteht sich für den Fachmann, dass hier lediglich beispielhafte Ausführungsformen beschrieben sind. Die verschiedenen beschriebenen Merkmale können in beliebiger Kombination zur Verwirklichung der Erfindung genutzt werden. Sowohl hinsichtlich der Hardware als auch hinsichtlich der Reihenfolge der Verfahrensschritte sind Abweichungen möglich.

Bezugszeichenliste

| | |
|---|---|
| 1 | Kartenlesegerät |
| 2 | Steuereinheit |
| 3 | Sendeeinheit |
| 4 | Modulationseinheit |
| 5 | Impedanzregister für die modulierte Magnetfeldstärke |
| 6 | Impedanzregister für die unmodulierte Magnetfeldstärke |
| 7 | Ausgangsimpedanzregister |
| 8 | Treibereinheit |
| 9 | Oszillator |
| 10 | Filtereinheit |
| 11 | Sendeantenne |
| 12 | Auswerteeinheit |
| 13 | Empfangsantenne |
| 14 | Aufbereitungsschaltung |
| 15 | Demodulationseinheit |
| 16 | Messschaltung |
| 17 | Detektionsschaltung |
| 18 | A/D-Wandler |
| 19 | Schnittstelle |
| 20 | integrierter Chip |
| 101 | Zeitskala |
| 110 | Magnetfeldstärke |
| 111 | Ausgangsmagnetfeldstärke |
| 112 | abgesenkte Magnetfeldstärke |
| 120 | Sendeaktivität des Kartenlesegeräts |
| 130 | Sendeaktivität des Kartenlesegeräts |
| 140 | Zeitberiech |
| 150 | Magnetfeldstärkeskala |
| 160 | angebotene Absenkungsparameter |
| 161 - 165 | angebotene Absenkungsstufen |
| 170 | akzeptable Absenkungsparameter |
| 171 - 173 | akzeptable Absenkungsstufen |
| 200 | Verfahren zum Betrieben eines Kartenlesegeräts |
| 201 - 220 | Verfahrensschritte/-zweige |

## Patentansprüche

**1.** Verfahren (200) zum Betreiben eines Kartenlesegeräts (1) umfassend die Schritte:

- Erzeugen eines Hochfrequenzmagnetfelds in einem Nahbereich des Kartenlesegeräts (1),

  wobei das Hochfrequenzmagnetfeld gesteuert wird, um eine Kommunikation mit einer kontaktlos auslesbaren Karteneinheit auszuführen,

  und wobei bei einer Informationsübermittlung von dem Kartenlesegerät (1) zu der in dem Nahbereich befindlichen kontaktlos auslesbaren Karteneinheit eine Modulation des Hochfrequenzmagnetfelds ausgeführt wird;

- Auswerten des Hochfrequenzmagnetfelds, um eine Variation des Hochfrequenzmagnetfelds durch die in dem Nahbereich befindliche kontaktlos auslesbare Karteneinheit zu erfassen und zu analysieren,

**dadurch gekennzeichnet, dass**

in einem Zeitbereich zwischen einem Empfang eines von der kontaktlos auslesbaren Karteneinheit zu dem Kartenlesegerät gesendeten Datenrahmens, der zumindest aufgrund der empfangenen Modulation, welche über die Variation des Hochfrequenzmagnetfelds durch die kontaktlos auslesbare Karteneinheit bewirkt ist, eine korrekte Struktur aufweist, und einer nachfolgenden Informationsübermittlung von dem Kartenlesegerät an die kontaktlos auslesbare Karteneinheit die Magnetfeldstärke (110) des nicht modulierten, im Nahbereich des Kartenlesegerätes (1) erzeugten Hochfrequenzmagnetfelds gegenüber einer Ausgangsmagnetfeldstärke (111) auf eine vorfestgelegte abgesenkte Magnetfeldstärke (112) des nicht modulierten Hochfrequenzmagnetfelds abgesenkt wird, so dass das Hochfrequenzmagnetfeld mit der abgesenkten Magnetfeldstärke (112) im Nahbereich des Kartenlesegerätes (1) erzeugt wird,
wobei die Ausgangsmagnetfeldstärke (111) jene Magnetfeldstärke ist, mit welcher das seitens des Kartenlesegeräts nicht modulierte, nicht abgesenkte Hochfrequenzmagnetfeld während der Informationsübermittlung zwischen dem Kartenlesegerät und der kontaktlos auslesbaren Karteneinheit erzeugt wird, wobei die vorfestgelegte abgesenkte Magnetfeldstärke (112) des nicht modulierten Hochfrequenzmagnetfelds so festgelegt wird, dass die kontaktlos auslesbare Karteneinheit bei der vorfestgelegten abgesenkten Magnetfeldstärke (112) in einem Niedrigenergiemodus betreibbar ist,
wobei in dem Niedrigenergiemodus die Kommunikationsverbindung nicht unterbrochen ist, sondern lediglich im Niedrigenergiemodus seitens der kontaktlos auslesbaren Karteneinheit fortgesetzt wird,
wobei in dem Niedrigenergiemodus die kontaktlos auslesbare Karteneinheit jedoch nicht in der Lage sein muss, Informationen von dem Kartenlesegerät zu empfangen oder Informationen an dieses zu senden,
wobei jedoch die kontaktlos auslesbare Karteneinheit zumindest Übertragungsparameter, die für eine aktuelle Kommunikationsverbindung ausgehandelt sind, und/oder andere für die Kommunikationsverbindung spezifische Daten in dem Niedrigenergiemodus so speichert, dass diese anschließend in einem Normalmodus wieder zur Verfügung stehen, ohne eine erneute Aushandlung der Parameter oder Daten zu erfordern.

**2.** Verfahren (200) nach Anspruch 1, **dadurch gekennzeichnet, dass** die Magnetfeldstärke (110) des nicht modulierten Hochfrequenzmagnetfelds vor der nachfolgenden Informationsübermittlung von dem Kartenlesegerät zu der kontaktlos auslesbaren Karteneinheit wieder auf die Ausgangsmagnetfeldstärke (111) erhöht wird und die Modulation des Hochfrequenzmagnetfelds zum Bewirken der Informationsübermittlung erst beginnt, nachdem seit dem Erhöhen der Magnetfeldstärke (110) auf die Ausgangsmagnetfeldstärke (111) mindestens eine vorfestgelegte Reinitialisierungszeitspanne verstrichen ist.

**3.** Verfahren (200) nach einem der vorangehenden Ansprüche, **dadurch gekennzeichnet, dass** das Absenken der Magnetfeldstärke (110) um mindestens eine vorfestgelegte Nachbearbeitungszeitspanne gegenüber dem korrekten Empfang des von der kontaktlos auslesbaren Karteneinheit zu dem Kartenlesegerät übermittelten Datenrahmens verzögert wird.

**4.** Verfahren (200) nach einem der vorangehenden Ansprüche, **dadurch gekennzeichnet, dass** das Kartenlesegerät eine Anfrage zum Ermitteln von für die kontaktlos auslesbare Karteneinheit akzeptablen Absenkungsparametern (170) an die kontaktlos auslesbare Karteneinheit übermittelt und das Kartenlesegerät aus einer erhaltenen Antwortinformation mindestens einen Absenkungsparameter extrahiert, der eine Angabe darüber enthält, welche absenkte Magnetfeldstärke (112) des nicht modulierten Hochfrequenzmagnetfelds für die kontaktlos auslesbare Karteneinheit akzeptabel ist, sodass diese im Niedrigenergiemodus betreibbar ist, und das Kartenlesegerät die vorfestgelegte abgesenkte Magnetfeldstärke (112) des nicht modulierten Hochfrequenzmagnetfelds entsprechend festlegt.

**5.** Verfahren (200) nach Anspruch 4, **dadurch gekennzeichnet, dass** mit der Anfrage zum Ermitteln der für die kontaktlos auslesbare Karteneinheit akzeptablen Absenkungsparameter (170) an die kontaktlos auslesbare Karteneinheit ein oder mehrere angebotene Absenkungsparameter (161 - 165) für das Absenken der Magnetfeldstärke des nicht modulierten Hochfrequenzmagnetfelds des Kartenlesegerätes angegeben werden.

**6.** Verfahren (200) nach Anspruch 5, **dadurch gekennzeichnet, dass** aus der erhaltenen Antwortinformation der kontaktlos auslesbaren Karteneinheit auf die Anfrage zum Ermitteln der akzeptablen Absenkungsparameter (170) ein oder mehrere akzeptable Absenkungsparameter ermittelt werden, bei deren Verwendung die kontaktlos auslesbare Karteneinheit im Niedrigenergiemodus betreibbar ist, und das Kartenlesegerät die Magnetfeldabsenkung so vornimmt, dass die vorfestgelegte abgesenkte Magnetfeldstärke (112) des nicht modulierten Hochfrequenzmagnetfelds höher oder gleich als die niedrigste akzeptable Magnetfeldstärke des nicht modulierten Hochfrequenzmagnetfelds gemäß den akzeptablen Absenkungsparametern der kontaktlos auslesbaren Karteneinheit ist.

**7.** Verfahren (200) nach einem der Ansprüche 4 bis 6, **dadurch gekennzeichnet, dass** die Absenkungsparameter die Magnetfeldstärke des nicht modulierten Hochfrequenzmagnetfelds jeweils relativ zur erzeugten oder empfangenen Ausgangsmagnetfeldstärke angeben.

**8.** Verfahren (200) nach einem der vorangehenden Ansprüche, **dadurch gekennzeichnet, dass** das Kartenlesegerät prüft, ob noch eine zweite kontaktlos auslesbare Karteneinheit in dem Hochfrequenzmagnetfeld vorhanden ist, und, falls dieses der Fall ist, die Absenkung der Magnetfeldstärke (110) des nicht modulierten Hochfrequenzmagnetfelds unterlässt.

**9.** Kartenlesegerät (1) für ein Kommunizieren mit einer kontaktlos auslesbaren Karteneinheit in einem Nahbereich des Kartenlesegeräts (1) umfassend:

- eine Steuereinheit (2),
- eine mit der Steuereinheit (2) verknüpfte steuerbare Sendeeinheit (3) zum Erzeugen eines Hochfrequenzmagnetfelds in einem Nahbereich des Kartenlesegeräts (1), wobei eine Magnetfeldstärke des Hochfrequenzmagnetfelds steuerbar ist, um eine Kommunikation mit der kontaktlos auslesbaren Karteneinheit auszuführen, und wobei die Sendeeinheit (3) ausgebildet ist, für eine Informationsübermittlung von dem Kartenlesegerät(1) zu einer in dem Nahbereich befindlichen kontaktlos auslesbaren Karteneinheit eine Modulation des Hochfrequenzmagnetfelds auszuführen;
und eine mit der Steuereinheit (2) verknüpfte Auswerteeinheit (12) zum Auswerten des Hochfrequenzmagnetfelds, um eine Variation des Magnetfelds durch die in dem Nahbereich befindliche kontaktlos auslesbare Karteneinheit zu erfassen und zu analysieren,
**dadurch gekennzeichnet, dass**
die Steuereinheit (2) ausgebildet ist, das Verfahren nach einem der Ansprüche 1 bis 8 auszuführen.

**10.** Kontaktlos auslesbare Karteneinheit umfassend

- einen Empfangsschaltkreis zum Empfangen eines von einem Kartenlesegerät erzeugten Hochfrequenzmagnetfelds,
- eine Gleichrichtereinheit zum Bereitstellen von elektrischer Energie, welche aus dem Hochfrequenzmagnetfeld extrahiert wird,
- eine Demodulationseinrichtung, um auf das Hochfrequenzmagnetfeld seitens des Kartenlesegeräts modulierte Informationen demodulieren zu können,
- einen steuerbaren Schalter zum Verändern einer Last oder einer Kapazität des Empfangsschaltkreises und gezielten Variieren des Hochfrequenzmagnetfelds auf diese Weise zum Übermitteln von Antwortinformationen an das Kartenlesegerät, sowie

eine Logikeinheit zum Auswerten der empfangenen demodulierten Informationen und Erzeugen von Antwortinformationen
**dadurch gekennzeichnet, dass**
die kontaktlos auslesbare Karteneinheit in zwei sich hinsichtlich des Energiebedarfs unterscheidenden Betriebsmodi, einem Normalmodus und einem Niedrigenergiemodus, betreibbar ist,
wobei eine Umschalteinrichtung ausgebildet ist, die kontaktlos auslesbare Karteneinheit in den Niedrigenergiemodus zu versetzen,
wobei in dem Niedrigenergiemodus zumindest ausgehandelte Kommunikationsparameter und/oder für eine aktuelle Kommunikationsverbindung spezifische Informationen gespeichert bleiben und in einem nachfolgenden Betrieb im Normalmodus nutzbar sind und die Kommunikationsverbindung nicht unterbrochen ist, sondern lediglich im Niedrigenergiemodus seitens der kontaktlos auslesbaren Karteneinheit fortgesetzt wird,
wobei die kontaktlos auslesbare Karteneinheit in dem Niedrigenergiemodus jedoch nicht in der Lage sein muss, Informationen von dem Kartenlesegerät zu empfangen oder Informationen an dieses zu senden.

**11.** Kontaktlos auslesbare Karteneinheit nach Anspruch 10, **dadurch gekennzeichnet, dass** die Umschalteinrichtung ausgebildet ist, bei einem Feststellen eines erneuten Anhebens der Magnetfeldstärke auf die empfangene Ausgangsmagnetfeldstärke, eine Reinitialisierung der Karteneinheit zu bewirken, welche die kontaktlos auslesbare Karteneinheit in einen funktionellen Zustand versetzt, welcher jenem vor dem Übergang in den Niedrigenergiezustand entspricht, wobei die empfangene Ausgangsmagnetfeldstärke jene Feldstärke ist, welche von der kontaktlos auslesbaren Karteneinheit als Magnetfeldstärke des seitens des Kartenlesegeräts nicht modulierten Hochfrequenzmagnetfelds während der Informationsübermittlung im Normalmodus empfangen wurde.

**12.** Kontaktlos auslesbare Karteneinheit nach einem der Ansprüche 10 oder 11, **dadurch gekennzeichnet, dass** die Umschalteinrichtung ausgebildet ist, das Versetzen in den Niedrigenergiemodus zu bewirken, sobald eine Antwortinformation an das Kartenlesegerät übermittelt ist oder nachdem ein Absenken der Magnetfeldstärke erfasst ist, sofern das Absenken größer als eine durch eine Modulation zur Informationsübermittlung seitens des Kartenlesegeräts bewirkte Magnetfeldstärkenänderung ist.

**13.** Kontaktlos auslesbare Karteneinheit nach einem der Ansprüche 10 bis 12, **dadurch gekennzeichnet, dass** die Umschalteinrichtung ausgebildet ist, anhand der empfangenen Magnetfeldstärke des Hochfrequenzmagnetfelds ein oder mehrere Absenkungsparameter zu ermitteln, welche akzeptable sind, so dass bei deren Verwendung durch das Kartenlesegerät ein Betrieb der kontaktlos auslesbaren Karteneinheit im Niedrigenergiemodus möglich ist, und diesen einen oder die mehreren akzeptablen Absenkungsparameter an das Kartenlesegerät im Rahmen einer Absenkungsparameteraushandlung zu übermitteln.

**14.** System aus Kartenlesegerät und kontaktlos auslesbarer Karteneinheit, wobei das Kartenlesegerät und die kontaktlos auslesbare Karteneinheit ausgebildet sind, das Verfahren nach zumindest einem der Ansprüche 1 bis 8 auszuführen.

## Claims

**1.** Method (200) for operating a card reader (1), comprising the steps of:

- generating a high-frequency magnetic field in a close range of the card reader (1),

wherein the high-frequency magnetic field is controlled in order to perform a communication with a contactlessly readable card unit, and
wherein a transmission of information from the card reader (1) to the contactlessly readable card unit situated in the close range prompts performance of a modulation of the high-frequency magnetic field;

- evaluating the high-frequency magnetic field in order to capture and analyse a variation in the high-frequency magnetic field as a result of the contactlessly readable card unit situated in the close range,

**characterized in that**

in a time range between a reception of a data frame transmitted from the contactlessly readable card unit to the card reader, the data frame having a correct structure at least due to the received modulation that is caused by the variation in the high-frequency magnetic field by the contactlessly readable card unit, and a subsequent transmission of information from the card reader to the contactlessly readable card unit, the magnetic field strength (110) of the non-modulated high-frequency magnetic field generated in the close range of the card reader (1) is lowered in comparison with an initial magnetic field strength (111) to a magnetic field strength of the non-modulated high-frequency magnetic field that is lowered in a predefined manner, such that the high-frequency magnetic field is generated at the lowered magnetic field strength (112) in the close range of the card reader (1),
wherein the initial magnetic field strength (111) is that magnetic field strength at which the high-frequency magnetic field that is not lowered and not modulated by the card reader is generated during the information transmission between the card reader and the contactlessly readable card unit,
wherein the predefined lowered magnetic field strength (112) of the non-modulated high-frequency magnetic filed is determined so that the contactlessly readable card unit is able to be operated in a low-energy mode at the predefined lowered magnetic field strength (112),
wherein in the low-energy mode the communication connection is not interrupted but continued only in the low-energy mode by the contactlessly readable card unit, wherein in the low-energy mode the contactlessly readable card unit, however, does not have to be able to receive information from the card reader or transmit information thereto,
wherein, however, the contactlessly readable card unit stores at least transmission parameters that are negotiated for a current communication connection and/or other data specific to the communication connection in the low-energy mode in such a way that these are subsequently available again in a normal mode without the need for renegotiation of the parameters or data.

**2.** Method (200) according to Claim 1, **characterized in that** the magnetic field strength (110) of the non-modulated high-frequency magnetic field is increased to the initial magnetic field strength (111) again before the subsequent information transmission from the card reader to the contactlessly readable card unit and the modulation of the high-frequency magnetic field for effecting the information transmission begins only after at least one predetermined reinitialization period has passed since the increase in the magnetic field strength (110) to the initial magnetic field strength (111).

**3.** Method (200) according to either one of the preceding claims, **characterized in that** the lowering of the magnetic field strength (110) is delayed by at least one predetermined post-processing period with respect to the correct reception of the data frame transmitted from the contactlessly readable card unit to the card reader.

**4.** Method (200) according to any one of the preceding claims, **characterized in that** the card reader transmits to the contactlessly readable card unit a request for determining lowering parameters (170) that are acceptable for the contactlessly readable card unit and the card reader extracts from an obtained piece of response information at least one lowering parameter containing an indication of which lowered magnetic field strength (112) of the non-modulated high-frequency magnetic field is acceptable for the contactlessly readable card unit so that it is able to be operated in the low-energy mode, and the card reader accordingly determines the predetermined lowered magnetic field strength (112) of the non-modulated high-frequency magnetic field.

**5.** Method (200) according to Claim 4, **characterized in that**, together with the request for determining the lowering parameters (170) that are acceptable for the contactlessly readable card unit to the contactlessly readable card unit, one or more provided lowering parameters (161-165) for lowering the magnetic field strength of the non-modulated high-frequency magnetic field of the card reader are provided.

**6.** Method (200) according to Claim 5, **characterized in that** one or more acceptable lowering parameters are determined from the obtained response information of the contactlessly readable card unit in response to the request to determine the acceptable lowering parameters (170), the use of said acceptable lowering parameters enabling operation of the contactlessly readable card unit in the low-energy mode, and the card reader lowers the magnetic field so that the predetermined lowered magnetic field strength (112) of the non-modulated high-frequency magnetic field is greater than or equal to the lowest acceptable magnetic field strength of the non-modulated high-frequency magnetic field according to the acceptable lowering parameters of the contactlessly readable card unit.

**7.** Method (200) according to any one of Claims 4 to 6, **characterized in that** the lowering parameters indicate the magnetic field strength of the non-modulated high-frequency magnetic field in each case relative to the generated or received initial magnetic field strength.

**8.** Method (200) according to any one of the preceding claims, **characterized in that** the card reader checks whether a second contactlessly readable card unit is also present in the high-frequency magnetic field and, if this is the case, desists from the lowering of the magnetic field strength (110) of the non-modulated high-frequency magnetic field.

**9.** Card reader (1) for communication with a contactlessly readable card unit in a close range of the card reader (1), comprising:

- a control unit (2),
- a controllable transmission unit (3) linked to the control unit (2) for generating a high-frequency magnetic field in a close range of the card reader (1), wherein a magnetic field strength of the high-frequency magnetic field may be controlled in order to communicate with the contactlessly readable card unit, and wherein the transmission unit (3) is designed to modulate the high-frequency magnetic field for information transmission from the card reader (1) to a contactlessly readable card unit in the close range; and an evaluation unit (12) linked to the control unit (2) for evaluating the high-frequency magnetic field in order to detect and analyse a variation in the magnetic field by way of the contactlessly readable card unit in the close range,

**characterized in that**

the control unit (2) is designed to carry out the method according to any one of Claims 1 to 8.

**10.** Contactlessly readable card unit, comprising:

- a reception circuit for receiving a high-frequency magnetic field generated by a card reader,
- a rectifier unit for providing electrical energy that is extracted from the high-frequency magnetic field,
- a demodulation device in order to be able to demodulate modulated information onto the high-frequency magnetic field on the part of the card reader,
- a controllable switch for changing a load or a capacitance of the reception circuit and varying the high-frequency magnetic field in a targeted manner in this way to transmit response information to the card reader,

and

a logic unit for evaluating the received demodulated information and generating response information, **characterized in that**

the contactlessly readable card unit is able to be operated in two operating modes that differ in terms of the energy requirement, a normal mode and a low-energy mode,

wherein a switchover device is designed to set the contactlessly readable card unit to the low-energy mode, wherein at least negotiated communication parameters and/or information specific to a current communication connection remain stored in the low-energy mode and are able to be used in a subsequent operation in the normal mode and the communication connection is not interrupted but continued only in the low-energy mode by the contactlessly readable card unit,

wherein in the low-energy mode the contactlessly readable card unit, however, does not have to be able to receive information from the card reader or transmit information thereto.

**11.** Contactlessly readable card unit according to Claim 10, **characterized in that** the switchover device is designed to reinitialize the card unit when it is determined that the magnetic field strength increases again to the received initial magnetic field strength, the reinitialization setting the contactlessly readable card unit to a functional state that corresponds to that before the transition to the low-energy state, wherein the received initial magnetic field strength is the field strength that has been received by the contactlessly readable card unit as magnetic field strength of the non-modulated high-frequency magnetic field on the part of the card reader during the information transmission in the normal mode.

**12.** Contactlessly readable card unit according to either one of Claims 10 or 11, **characterized in that** the switchover device is designed to set the low-energy mode as soon as a piece of response information is transmitted to the card read or after a lowering of the magnetic field strength is detected, provided the lowering is greater than a change in the magnetic field strength caused by modulation for the information transmission on the part of the card reader.

**13.** Contactlessly readable card unit according to any one of Claims 10 to 12, **characterized in that** the switchover device is designed to determine, based on the received magnetic field strength of the high-frequency magnetic field, one or more lowering parameters that are acceptable, such that it is possible to operate the contactlessly readable card unit in the low-energy mode when said lowering parameters are used by the card reader and it is possible to transmit said one or more acceptable lowering parameters to the card reader within a lowering parameter negotiation.

**14.** System made up of a card reader and a contactlessly readable card unit, wherein the card reader and the contactlessly readable card unit are designed to carry out the method according to at least one of Claims 1 to 8 .

## Revendications

**1.** Procédé (200) de fonctionnement d'un appareil lecteur de cartes (1) comprenant les étapes consistant à :

- générer un champ magnétique haute fréquence dans une zone proche de l'appareil lecteur de cartes (1),

dans lequel le champ magnétique haute fréquence est commandé afin d'effectuer une communication avec une unité de carte lisible sans contact, et
dans lequel, lors d'une transmission d'informations de l'appareil lecteur de cartes (1) à l'unité de carte lisible sans contact se trouvant dans la zone proche, une modulation du champ magnétique haute fréquence est effectuée ;

- évaluer le champ magnétique haute fréquence pour détecter et analyser une variation du champ magnétique haute fréquence au moyen de l'unité de carte lisible sans contact se trouvant dans la zone proche,

**caractérisé en ce que**,

dans une plage temporelle située entre une réception d'une trame de données envoyée par l'unité de carte lisible sans contact à l'appareil lecteur de cartes, qui présente une structure correcte au moins en raison de la modulation reçue, qui est provoquée par la variation du champ magnétique haute fréquence par l'unité de carte lisible sans contact, et une transmission d'informations suivante de l'appareil lecteur de cartes à l'unité de carte lisible sans contact, l'intensité de champ magnétique (110) du champ magnétique haute fréquence non modulé généré dans la zone proche de l'appareil lecteur de cartes (1) est réduite par rapport à une intensité de champ magnétique initiale (111) jusqu'à une intensité de champ magnétique réduite prédéfinie (112) du champ magnétique haute fréquence non modulé, de manière à ce que le champ magnétique haute fréquence soit généré avec l'intensité de champ magnétique réduite (112) dans la zone proche de l'appareil lecteur de cartes (1),
dans lequel l'intensité de champ magnétique initiale (111) est l'intensité de champ magnétique avec laquelle le champ magnétique haute fréquence non modulé et non réduit par l'appareil lecteur de cartes est généré pendant la transmission d'informations entre l'appareil lecteur de cartes et l'unité de carte lisible sans contact,
dans lequel l'intensité de champ magnétique réduite prédéfinie (112) du champ magnétique haute fréquence non modulé est déterminée de manière à ce que l'unité de carte lisible sans contact puisse être utilisée dans un mode à faible énergie à l'intensité de champ magnétique réduite prédéfinie (112),
dans lequel, dans le mode à faible énergie, la liaison de communication n'est pas interrompue, mais est uniquement poursuivie dans le mode à faible énergie du côté de l'unité de carte lisible sans contact,
dans lequel, dans le mode à faible énergie, l'unité de carte lisible sans contact ne doit toutefois pas être en mesure de recevoir des informations en provenance de l'appareil lecteur de cartes ou de lui envoyer des informations,
dans lequel l'unité de carte lisible sans contact stocke toutefois au moins certains paramètres de transfert négociés pour une liaison de communication en cours et/ou d'autres données spécifiques à la liaison de communication dans le mode à faible énergie de manière à ce que celles-ci soient ensuite à nouveau disponibles dans un mode normal sans nécessiter une renégociation des paramètres ou des données.

**2.** Procédé (200) selon la revendication 1, **caractérisé en ce que** l'intensité de champ magnétique (110) du champ magnétique haute fréquence non modulé est à nouveau augmentée jusqu'à l'intensité de champ magnétique initiale (111) avant la transmission d'informations suivante de l'appareil lecteur de cartes à l'unité de carte lisible sans contact, et la modulation du champ magnétique haute fréquence pour effectuer la transmission d'informations ne commence qu'après qu'au moins une période de réinitialisation prédéfinie se soit écoulée depuis l'augmentation de l'intensité de champ magnétique (110) jusqu'à l'intensité de champ magnétique initiale (111) .

**3.** Procédé (200) selon l'une quelconque des revendications précédentes, **caractérisé en ce que** la réduction de l'intensité de champ magnétique (110) est retardée d'au moins un intervalle de temps de post-traitement prédéfinie par rapport à la réception correcte de la trame de données transmise par l'unité de carte lisible sans contact à l'appareil lecteur de cartes.

**4.** Procédé (200) selon l'une des revendications précédentes, **caractérisé en ce que** l'appareil lecteur de cartes transmet à l'unité de carte lisible sans contact une demande de détermination de paramètres de réduction (170) acceptables pour l'unité de carte lisible sans contact, et l'appareil lecteur de cartes extrait d'une information de réponse reçue au moins un paramètre de réduction qui contient une indication de l'intensité de champ magnétique réduite (112) du champ magnétique haute fréquence non modulé qui est acceptable pour l'unité de carte lisible sans contact, de manière à ce que celle-ci puisse fonctionner en mode à faible énergie, et l'appareil lecteur de cartes détermine en conséquence l'intensité de champ magnétique réduite (112) prédéfinie du champ magnétique haute fréquence non modulé.

**5.** Procédé (200) selon la revendication 4, **caractérisé en ce qu'**en association avec la demande de détermination des paramètres de réduction (170) acceptables pour l'unité de carte lisible sans contact, un ou plusieurs paramètres de réduction (161-165) proposés pour la réduction de l'intensité de champ magnétique du champ magnétique haute fréquence non modulé de l'appareil lecteur de cartes sont indiqués à l'unité de carte lisible sans contact.

**6.** Procédé (200) selon la revendication 5, **caractérisé en ce que**, à partir dans l'information de réponse obtenue de l'unité de carte lisible sans contact à la demande de détermination des paramètres de réduction acceptables (170), il est procédé à la détermination d'un ou plusieurs paramètres de réduction acceptables dont l'utilisation permet de faire fonctionner l'unité de carte lisible sans contact en mode à faible énergie, et l'appareil lecteur de cartes effectue la réduction de champ magnétique de manière à ce que l'intensité de champ magnétique réduite prédéterminée (112) du champ magnétique haute fréquence non modulé soit supérieure ou égale à l'intensité de champ magnétique acceptable la plus basse du champ magnétique haute fréquence non modulé selon les paramètres de réduction acceptables de l'unité de carte lisible sans contact.

**7.** Procédé (200) selon l'une des revendications 4 à 6, **caractérisé en ce que** les paramètres de réduction indiquent l'intensité de champ magnétique du champ magnétique haute fréquence non modulé respectivement par rapport à l'intensité de champ magnétique initiale générée ou reçue.

**8.** Procédé (200) selon l'une des revendications précédentes, **caractérisé en ce que** l'appareil lecteur de cartes vérifie si une deuxième unité de carte lisible sans contact est encore présente dans le champ magnétique haute fréquence et, si tel est le cas, s'abstient de réduire l'intensité de champ magnétique (110) du champ magnétique haute fréquence non modulé.

**9.** Appareil lecteur de cartes (1) destiné à communiquer avec une unité de carte lisible sans contact dans une zone proche de l'appareil lecteur de cartes (1) comprenant :

- une unité de commande (2),
- une unité d'émission commandable (3) associée à l'unité de commande (2) pour générer un champ magnétique haute fréquence dans une zone proche de l'appareil lecteur de cartes (1), dans lequel une intensité de champ magnétique du champ magnétique haute fréquence peut être commandée afin d'effectuer une communication avec l'unité de carte lisible sans contact, et dans lequel l'unité d'émission (3) est conçue pour effectuer une modulation du champ magnétique haute fréquence pour une transmission d'informations de l'appareil lecteur de cartes (1) à une unité de carte lisible sans contact se trouvant dans la zone proche ;
et une unité d'évaluation (12) associée à l'unité de commande (2) afin d'évaluer le champ magnétique haute fréquence pour détecter et analyser une variation du champ magnétique au moyen de l'unité de carte lisible sans contact se trouvant dans la zone proche, **caractérisé en ce que**
l'unité de commande (2) est conçue pour mettre en œuvre le procédé selon l'une des revendications 1 à 8.

**10.** Unité de carte lisible sans contact comprenant

- un circuit de réception destiné à recevoir un champ magnétique haute fréquence généré par un appareil lecteur de cartes,
- une unité de redressement destinée à fournir de l'énergie électrique qui est extraite du champ magnétique haute fréquence,
- un dispositif de démodulation permettant de démoduler des informations modulées sur le champ magnétique haute fréquence du côté de l'appareil lecteur de cartes,
- un commutateur commandable destiné à modifier une charge ou une capacité du circuit de réception et à faire varier de manière ciblée le champ magnétique haute fréquence afin de transmettre des informations de réponse à l'appareil lecteur de cartes,
ainsi qu'une unité logique destinée à évaluer les informations démodulées reçues et à générer des informations de réponse,
**caractérisée en ce que**
l'unité de carte lisible sans contact est utilisable dans deux modes de fonctionnement se différenciant en en ce qui concerne le besoin en énergie, à savoir un mode normal et un mode à faible énergie,
dans laquelle un dispositif de commutation est conçu pour faire passer l'unité de carte lisible sans contact dans le mode à faible énergie,
dans laquelle, dans le mode à faible énergie, au moins certains paramètres de communication négociés et/ou des informations spécifiques à une liaison de communication en cours restent stockés et sont utilisables dans un fonctionnement suivant en mode normal et la liaison de communication n'est pas interrompue, mais est simplement poursuivie dans le mode à faible énergie du côté de l'unité de carte lisible sans contact,
dans laquelle, dans le mode à faible énergie, l'unité de carte lisible sans contact ne doit toutefois pas être en mesure de recevoir des informations en provenance de l'appareil lecteur de cartes ou de lui envoyer des informations.

**11.** Unité de carte lisible sans contact selon la revendication 10, **caractérisée en ce que** le dispositif de commutation est conçu, lors de la détermination d'une nouvelle augmentation de l'intensité de champ magnétique jusqu'à l'intensité de champ magnétique initiale reçue, pour provoquer une réinitialisation de l'unité de carte, qui fait passer l'unité de carte lisible sans contact dans un état de fonctionnement qui correspond à celui précédant le passage à l'état de faible énergie, dans laquelle l'intensité de champ magnétique initiale reçue est l'intensité de champ magnétique reçue par l'unité de carte lisible sans contact sous forme de champ magnétique haute fréquence non modulé du côté de l'appareil lecteur de cartes pendant la transmission d'informations en mode normal.

**12.** Unité de carte lisible sans contact selon l'une des revendications 10 ou 11, **caractérisée en ce que** le dispositif de commutation est conçu pour provoquer le passage en mode à faible énergie dès qu'une information de réponse est transmise à l'appareil lecteur de cartes ou après qu'une réduction de l'intensité de champ magnétique a été détectée, dans la mesure où la réduction est supérieure à une variation d'intensité de champ magnétique provoquée par une modulation destinée à la transmission d'informations du côté de l'appareil lecteur de cartes.

**13.** Unité de carte lisible sans contact selon l'une des revendications 10 à 12, **caractérisée en ce que** le dispositif de commutation est conçu pour déterminer, à partir de l'intensité magnétique reçue du champ magnétique haute fréquence, un ou plusieurs paramètres de réduction qui sont acceptables, de manière à ce que, lors de leur utilisation par l'appareil lecteur de cartes, un fonctionnement de l'unité de carte lisible sans contact en mode à faible énergie soit possible, et pour transmettre lesdits un ou plusieurs paramètres de réduction acceptables à l'appareil lecteur de cartes dans le cadre d'une négociation de paramètres de réduction.

**14.** Système constitué d'un appareil lecteur de cartes et d'une unité de carte lisible sans contact, dans lequel l'appareil lecteur de cartes et l'unité de carte lisible sans contact sont conçus pour mettre en œuvre le procédé selon au moins l'une des revendications 1 à 8.

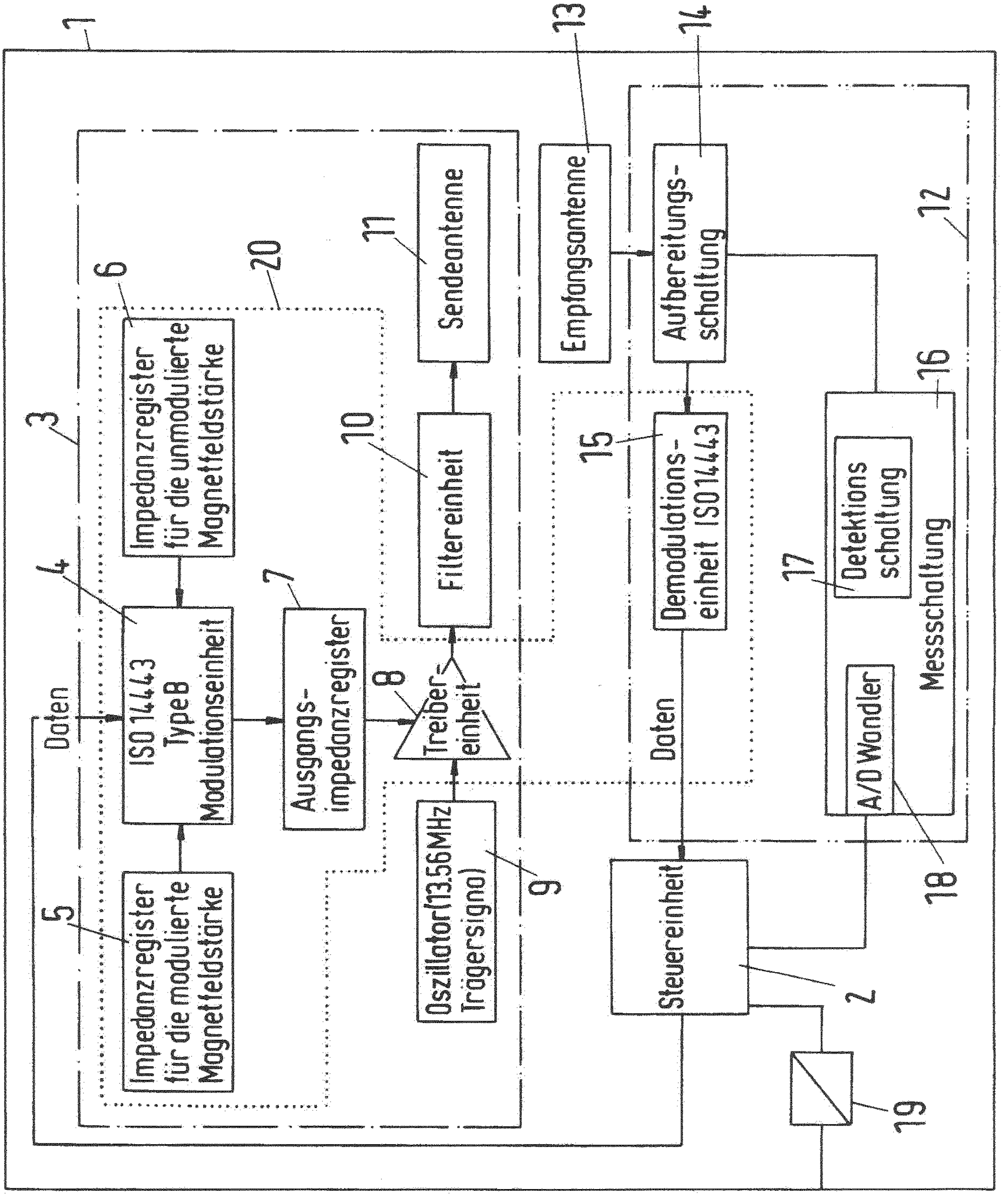
Impedanzregister für die modulierte Magnetfeldstärke
Impedanzregister für die unmodulierte Magnetfeldstärke
Daten
ISO 14443 Type B Modulationseinheit
Ausgangs-impedanzregister
Treiber-einheit
Oszillator(13.56MHz Trägersignal)
Filtereinheit
Sendeantenne
Empfangsantenne
Aufbereitungs-schaltung
Demodulations-einheit ISO14443
Daten
Steuereinheit
Detektions schaltung
A/D Wandler
Messschaltung
1
2
3
4
5
6
7
8
9
10
11
12
13
14
15
16
17
18
19
20

Fig.1

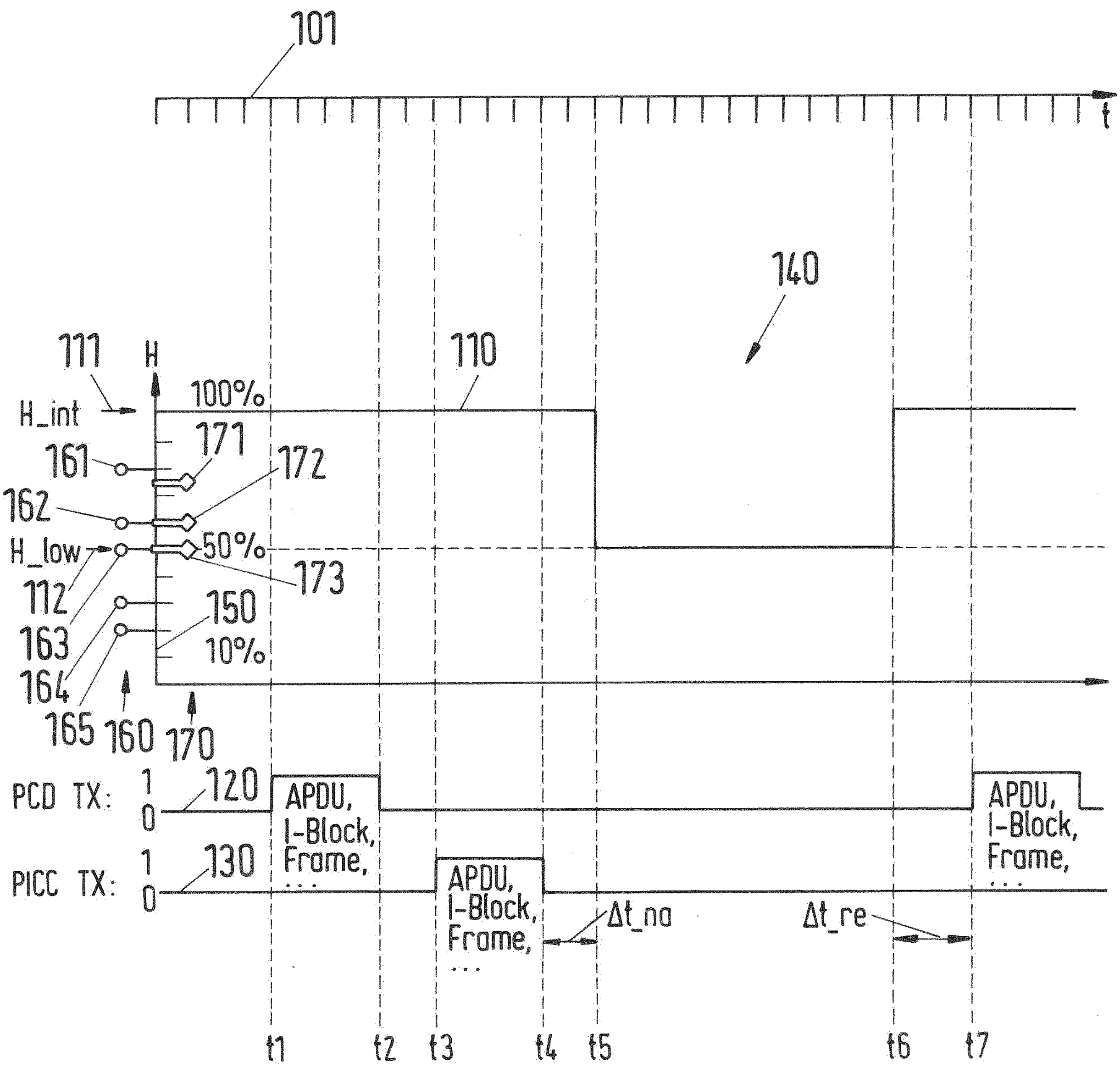
101
t
140
111
H
110
H_int
100%
161
171
172
162
H_low
50%
173
112
163
150
10%
164
165
160
170
PCD TX:
1
0
120
APDU,
I-Block,
Frame,
...
PICC TX:
1
0
130
APDU,
I-Block,
Frame,
...
Δt_na
Δt_re
APDU,
I-Block,
Frame,
...
t1
t2
t3
t4
t5
t6
t7

Fig.2

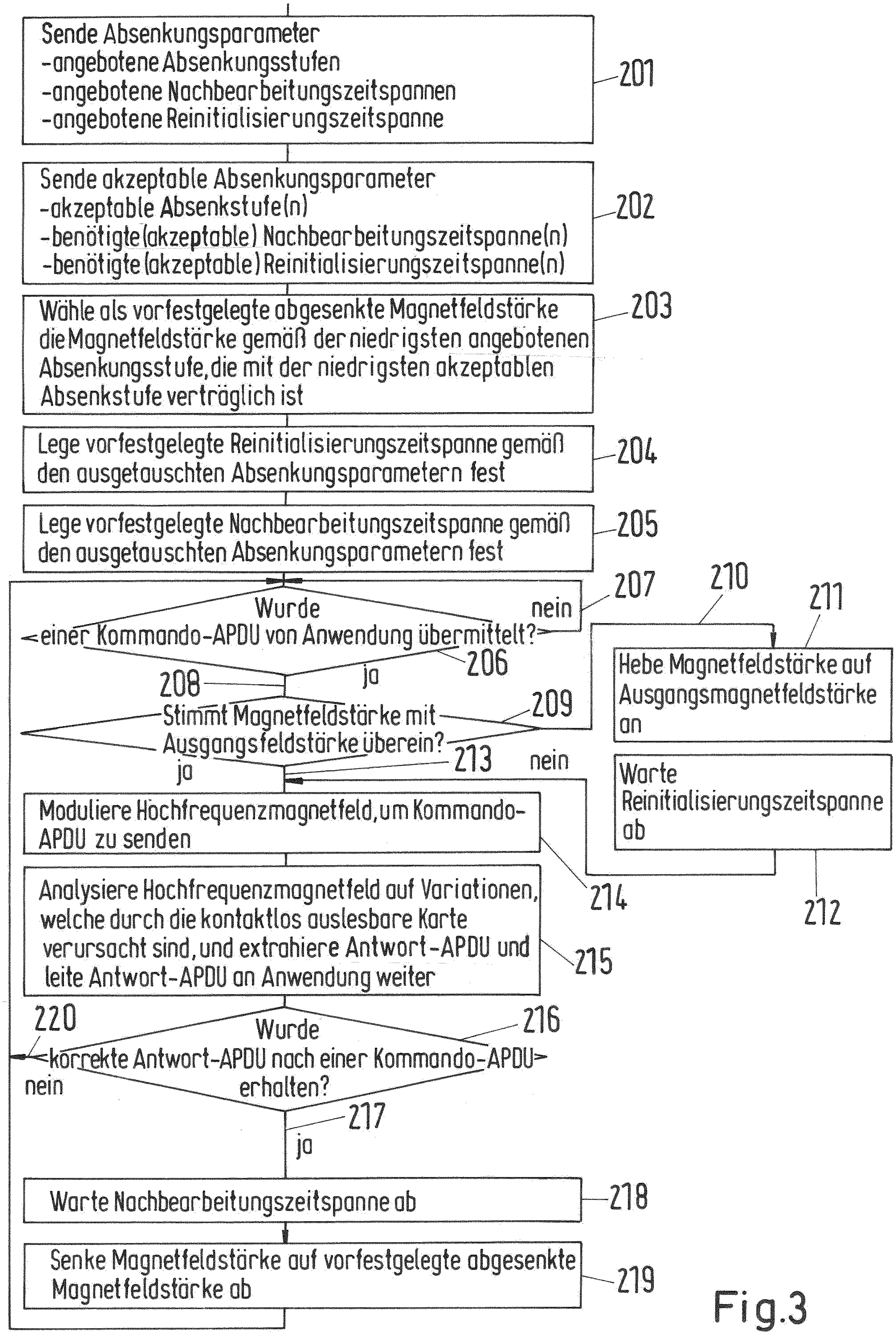
Sende Absenkungsparameter
-angebotene Absenkungsstufen
-angebotene Nachbearbeitungszeitspannen
-angebotene Reinitialisierungszeitspanne
201
Sende akzeptable Absenkungsparameter
-akzeptable Absenkstufe(n)
-benötigte (akzeptable) Nachbearbeitungszeitspanne(n)
-benötigte (akzeptable) Reinitialisierungszeitspanne(n)
202
Wähle als vorfestgelegte abgesenkte Magnetfeldstärke die Magnetfeldstärke gemäß der niedrigsten angebotenen Absenkungsstufe, die mit der niedrigsten akzeptablen Absenkstufe verträglich ist
203
Lege vorfestgelegte Reinitialisierungszeitspanne gemäß den ausgetauschten Absenkungsparametern fest
204
Lege vorfestgelegte Nachbearbeitungszeitspanne gemäß den ausgetauschten Absenkungsparametern fest
205
Wurde einer Kommando-APDU von Anwendung übermittelt?
nein
ja
206
207
208
Stimmt Magnetfeldstärke mit Ausgangsfeldstärke überein?
209
ja
nein
213
210
211
Hebe Magnetfeldstärke auf Ausgangsmagnetfeldstärke an
Warte Reinitialisierungszeitspanne ab
212
Moduliere Hochfrequenzmagnetfeld, um Kommando-APDU zu senden
214
Analysiere Hochfrequenzmagnetfeld auf Variationen, welche durch die kontaktlos auslesbare Karte verursacht sind, und extrahiere Antwort-APDU und leite Antwort-APDU an Anwendung weiter
215
220
Wurde korrekte Antwort-APDU nach einer Kommando-APDU erhalten?
216
nein
217
ja
Warte Nachbearbeitungszeitspanne ab
218
Senke Magnetfeldstärke auf vorfestgelegte abgesenkte Magnetfeldstärke ab
219

Fig.3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102009009846 A1
- US 20100144269 A1